# EUROPEAN PATENT APPLICATION

(11) **EP 4 240 050 A1**
(43) Date of publication of application: **06.09.2023**
(21) Application number: 23159397.1
(22) Date of filing: 01.03.2023
(51) Int. Cl.: H04W 24/02, H04L 41/16, G06N 20/00, H04W 80/00, H04W 92/22

(54) **A1 ENRICHMENT INFORMATION RELATED FUNCTIONS AND SERVICES IN THE NON-REAL TIME RAN INTELLIGENT CONTROLLER**

(30) Priority: 01.03.2022 US 202263315488 P
(71) Applicant: INTEL Corporation, Santa Clara, CA 95054 (US)
(72) Inventor: RUAN, Leifeng, Beijing, 100190 (CN); LI, Qian, Beaverton, 97006 (US); HAN, Jaemin, Portland, 97229 (US); YING, Dawei, Hillsboro, 97124 (US)
(74) Representative: Viering, Jentschura & Partner mbB Patent- und Rechtsanwälte

(57) **Abstract**

A non-real time RAN intelligent controller (RIC) includes one or more processors, configured to execute an A1 Enrichment Information (EI) related function, wherein the A1 EI related function comprises enabling one or more of the following functionalities in a framework of the non-real time RIC: producing an A1 EI related service that permits a service consumer to register, update, and/or deregister EI types; collecting EI results for created EI jobs; or interfacing with Near-RT RICs through an A1 interface.

## Description

### CROSS REFERENCE TO RELATED APPLICATIONS

This application claims priority to US provisional application 63/315,488, filed on March 1, 2022, the entire contents of which are hereby incorporated by reference.

### BACKGROUND

Various embodiments generally may relate to the field of wireless communications.

### BRIEF DESCRIPTION OF THE DRAWINGS

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts the Non-RT RIC architecture with A1 enrichment information related function;
FIG. 2 depicts a A1 EI related services using of the resource URI structure of the A1 EI related services API;
FIG. 3 depicts service consumer registers EI types in the A1 EI related function;
FIG. 4 depicts service consumer updates of its registration of EI types in the A1 EI related function;
FIG. 5 depicts service consumer deregisters EI types in the A1 EI related function;
FIG. 6 depicts the A1 EI related function collecting EI results in the Non-RT RIC and delivering EI results to the Near-RT RIC;
FIG. 7 depicts a network in accordance with various embodiments;
FIG. 8 depicts a wireless network 800 in accordance with various embodiments;
FIG. 9 depicts components able to read instructions from a machine-readable or computer-readable medium and perform any one or more of the methodologies discussed herein;
FIG. 10 depicts a high-level view of an Open RAN (O-RAN) architecture; and
FIG. 11 depicts an O-RAN logical architecture corresponding to the O-RAN architecture of FIG. 10.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

O-RAN architecture aims to enable intelligent RAN operation and optimization using artificial intelligence (AI) and machine learning (ML) in wireless communication network [1]. RAN intelligence controllers (RIC) are developed to manage AI/ML-assisted solutions for RAN functions [2, 3]. Non-RT RIC can send A1 enrichment information (EI) to the Near-RT RIC via the A1 interface [4]. A1 EI is information that is not general available to the Near-RT RIC but is beneficial to RAN optimization and operation.

Various embodiments herein provide A1 enrichment information related functions (A1 EI related functions) in the Non-RT RIC architecture. It produces A1 EI related services. The service consumer of A1 EI related services can register, update, and deregister it produced EI types. A1 EI related functions interacts with data management and exposure functions in the Non-RT RIC to obtain EI data.

Various embodiments herein provide A1 enrichment information related functions in the Non-RT RIC architecture. It produces A1 enrichment information related services to rApps via the R1 interface or to the external enrichment information sources. Related procedures of A1 enrichment information related services are described.

Details of A1 enrichment information related function and services have not been specified yet in O-RAN WG2. There was only a general consensus that such functions and services should be defined in the Non-RT RIC architecture TS and R1 specifications.

### Brief overview on A1 enrichment information [5]

A1 enrichment information (EI) is defined as information that is generally not available to the Near-RT RIC, provided from the Non-RT RIC to the Near-RT RIC via the A1 interface, in order to enhance the performance of RAN optimization and operation in Near-RT RIC. The A1 interface is used for discovery, request, and delivery of A1 EI.

The Non-RT RIC may support different types of A1 EI, which is called as EI types, and the Near-RT RIC can use A1-EI services to discover available EI types in the Non-RT RIC. The Non-RT RIC is responsible of ensuring that EI types discovered by the Near-RT RIC can be used to create EI Jobs and EI job results can be delivered over the A1 interface.

An EI job is a resource created for the delivery of enrichment information, or so-called EI job results. An EI job is created, modified, and deleted by the Near-RT RIC. The EI job does not have information related to the producer nor consumer of the enrichment information. The EI job results is delivered from the Non-RT RIC to the Near-RT RIC using a push-based delivery method, and the Non-RT RIC is responsible to set-up connection with Near-RT RIC to delivery EI job results.

### A1 EI related function

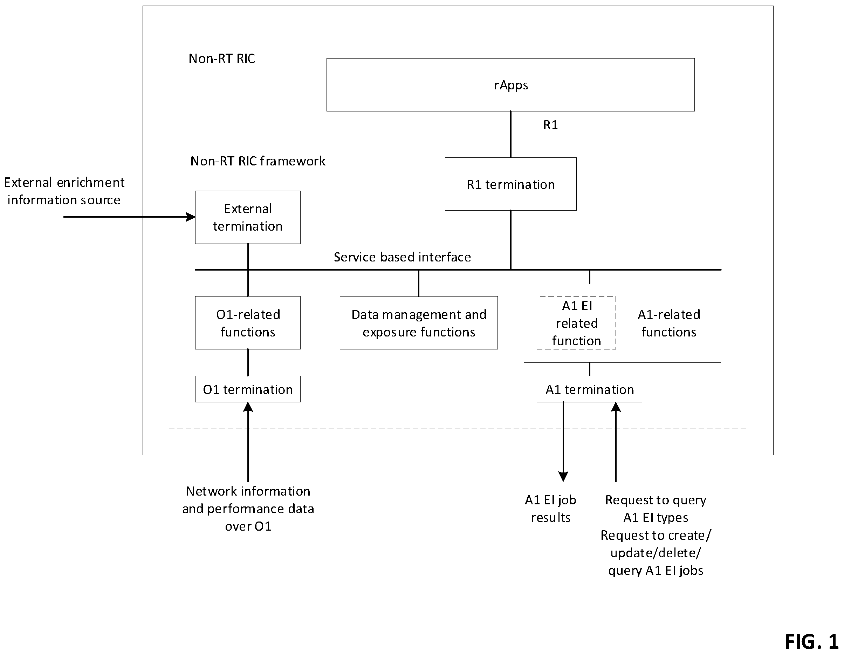

FIG. 1 illustrates the Non-RT RIC architecture with A1 enrichment information related function. The proposed A1 EI related function is part of A1 related functions in the Non-RT RIC framework. In one embodiment, the A1 EI related function provide the following functionality
- EI types registration and deregistration
   ∘ rApps can register and deregister its produced A1 EI types using the A1 EI related service via the R1 interface.
   ∘ External enrichment information sources can also register and deregister its produced A1 EI types to the A1 EI related function.
- Collecting EI results for created EI jobs.
   ∘ A1 EI related function collects EI results via consuming the data management and exposure services.
- Interfacing with Near-RT RICs through A1 interface
   ∘ A1 EI related function exposes discoverable EI types and detailed description of EI types to the Near-RT RIC, when the Near-RT RIC queries available EI types.
   ∘ A1 EI related function receives EI job creation, update, query, and deletion requests from the Near-RT RIC.
   ∘ A1 EI related function receives EI job statues query from the Near-RT RIC, and it notifies EI status to the Near-RT RIC.
   ∘ A1 EI related function sets up connection with the Near-RT RIC and delivers EI job results to the Near-RT RIC.

FIG. 1 depicts a Non-RT RIC architecture with A1 enrichment information related function A1-EI related services.

In one embodiment, Table 1 shows the A1-EI related services exposed to the service consumer. The A1-EI related services are produced by the A1 EI related function.

**Table 1 depicts A1-EI related services produced by the A1 EI related function.**

| Service Name | Service operation | Operation semantics | Description |
|---|---|---|---|
| EITypeRegistration | EITypeRegister | Request/response | EI producer rApp registers EI types in the A1 EI related function |
| | EITypeRegistrationUpdate | Request/response | EI producer rApp |
| | EITypeDeregister | Request/response | EI producer rApp deregisters EI types in the A1 EI related function |

Note that the A1 EI related service can be consumed by rApp via R1 interface, and it can also be consumed by external enrichment information sources outside of SMO/Non-RT RIC. The A1 EI related services consumed by the rApps are part of A1 related services available to rApps via the R1 interface.

### API design example

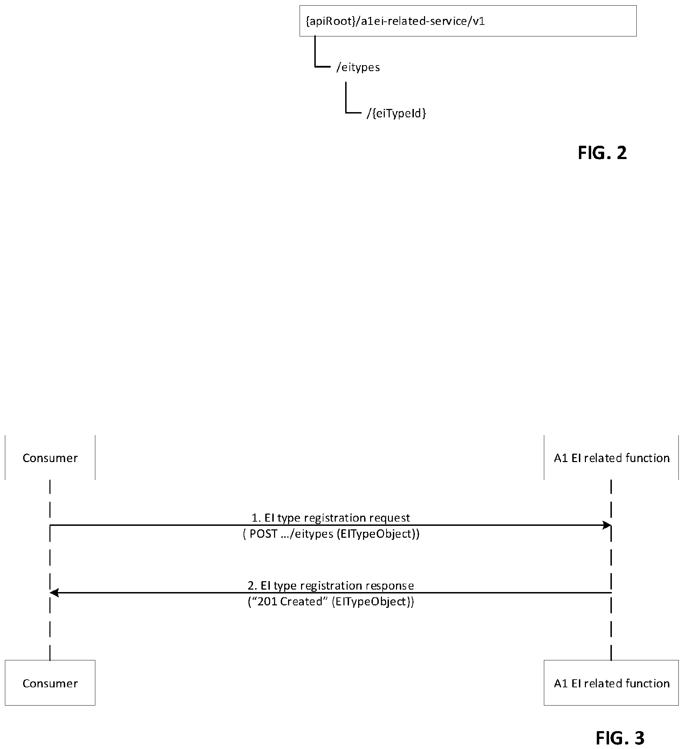

In one embodiment, the A1 EI related services use the resource URI structure of the A1 EI related services API as depicted in FIG. 2.

In one embodiment, an overview of the resource and applicable HTTP methods is summarized in Table 2.

**Table 2 depicts Resource and methods overview**

| **Resource name** | **Resource URI** | **HTTP methods** | **Description** |
|---|---|---|---|
| EI types | {apiRoot}/alei-related-services/v1/eitypes | POST | Register an EI type |
| Individual EI type | {apiRoot}/ alei-related-services/v1/eitypes/{ei TypeId} | PUT | Update a registered EI type |
| | | DELETE | Deregister an EI type |

In one embodiment, eiTypeObject is used as a JSON representation object in the A1 EI related service. The EI type object contains information of the registered EI type, including:
- Information for the A1 EI related function to fetch EI results from DME functions in the Non-RT RIC, e.g. registered EI data type in DME
- Information exposed to the Near-RT RIC via A1 interface, if any.

Note that the eiTypeObject described in this disclosure is not the same eiTypeObject defined in the A1-EI services of A1 interface. The eiTypeObject in A1 interface can be an empty object or it can contain specific information of EI types for the Near-RT RIC.

If the consumer service of A1 EI related service want expose any specific information about it produced EI type to the Near-RT RIC, it should contain such information in the eiTypeObject registered to the A1 EI related function.

### A1 enrichment information related procedures in the Non-RT RIC

### EI type registration and deregistration

Various service operations are illustrated in FIGs. 3-5.

FIG. 3 depicts service consumer registers EI types in the A1 EI related function.

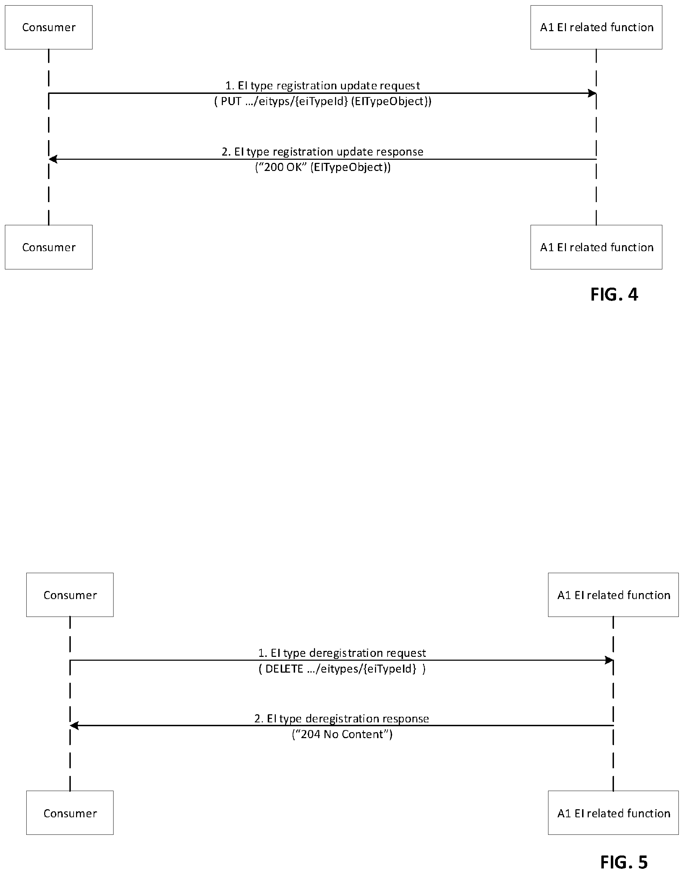

FIG. 4 depicts service consumer updates of its registration of EI types in the A1 EI related function.

FIG. 5 depicts service consumer deregisters EI types in the A1 EI related function. EI results collection and delivery.

FIG: 6 depicts the procedures for A1 EI related function to collect and deliver EI results, as follows:
- Step 1: rApp registers EI data type as one of its produced data types to the DME functions.
- Step 2: The DME functions respond to rApp indicating successful registration. The EI data type is now discoverable within the Non-RT RIC.
- Step 3: rApp registers EI type to the A1 EI related function.
- Step 4: The A1 EI related function respond to rApp indicating successful registration.
- Step 5: Based on the EI type registration information (eiTypeObject) from rApp, the A1 EI related function discovers EI data type from the DME functions.
- Step 6: The DEM functions respond to the A1 EI related function indicating the queried EI data type has been registered.
- Step 7: The Near-RT RIC queries available EI types in the Non-RT RIC.
- Step 8: The A1 EI related function responds providing discoverable EI types to the Near-RT RIC.
- Step 9: The Near-RT RIC create EI jobs for available EI type.
- Step 10: The A1 EI related function responds indicating EI job is successfully created.
- Step 11: The A1 EI related function subscribes EI data from the DME functions.
- Step 12: The DME functions respond to A1 EI related function indicating successful subscription.
- Step 13: The DME function subscribe EI data from rApp.
- Step 14: rApp responds to the DME functions indicating successful subscription.
- Step 15: When the EI data is available (produced by the rApp), rApp notifies DME functions the availability of EI data and delivery EI data to the DME functions.
- Step 16: The DME functions notify A1 EI related function the availability of EI data and delivery EI data to the A1 EI related function.
- Step 17: The A1 EI related function deliver received EI data as EI job results to the Near-RT RIC via A1 interface.

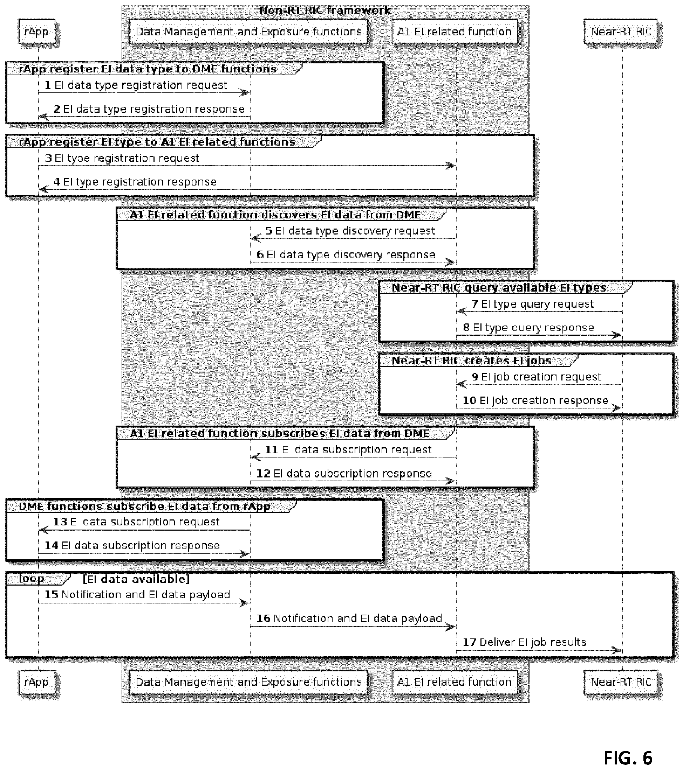

As shown in FIG. 6, the A1 EI related function collects EI results in the Non-RT RIC and delivers EI results to the Near-RT RIC.

### SYSTEMS AND IMPLEMENTATIONS

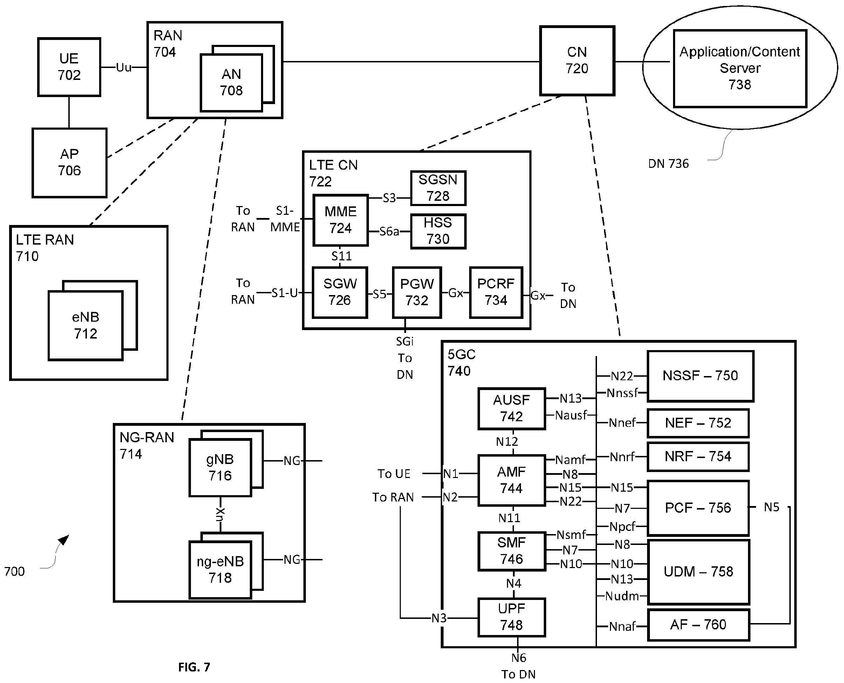

FIGs. 7-9 and 10-11 illustrate various systems, devices, and components that may implement aspects of disclosed embodiments.

FIG. 7 illustrates a network 700 in accordance with various embodiments. The network 700 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 700 may include a UE 702, which may include any mobile or non-mobile computing device designed to communicate with a RAN 704 via an over-the-air connection. The UE 702 may be communicatively coupled with the RAN 704 by a Uu interface. The UE 702 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 700 may include a plurality of UEs coupled directly with one another via a side link interface. The UEs may be M2M/D2D devices that communicate using physical sidelink channels such as, but not limited to, PSBCH, PSDCH, PSSCH, PSCCH, PSFCH, etc.

In some embodiments, the UE 702 may additionally communicate with an AP 706 via an over-the-air connection. The AP 706 may manage a WLAN connection, which may serve to offload some/all network traffic from the RAN 704. The connection between the UE 702 and the AP 706 may be consistent with any IEEE 802.11 protocol, wherein the AP 706 could be a wireless fidelity (Wi-Fi^{®}) router. In some embodiments, the UE 702, RAN 704, and AP 706 may utilize cellular-WLAN aggregation (for example, LWA/LWIP). Cellular-WLAN aggregation may involve the UE 702 being configured by the RAN 704 to utilize both cellular radio resources and WLAN resources.

The RAN 704 may include one or more access nodes, for example, AN 708. AN 708 may terminate air-interface protocols for the UE 702 by providing access stratum protocols including RRC, PDCP, RLC, MAC, and L1 protocols. In this manner, the AN 708 may enable data/voice connectivity between CN 720 and the UE 702. In some embodiments, the AN 708 may be implemented in a discrete device or as one or more software entities running on server computers as part of, for example, a virtual network, which may be referred to as a CRAN or virtual baseband unit pool. The AN 708 be referred to as a BS, gNB, RAN node, eNB, ng-eNB, NodeB, RSU, TRxP, TRP, etc. The AN 708 may be a macrocell base station or a low power base station for providing femtocells, picocells or other like cells having smaller coverage areas, smaller user capacity, or higher bandwidth compared to macrocells.

In embodiments in which the RAN 704 includes a plurality of ANs, they may be coupled with one another via an X2 interface (if the RAN 704 is an LTE RAN) or an Xn interface (if the RAN 704 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 704 may each manage one or more cells, cell groups, component carriers, etc. to provide the UE 702 with an air interface for network access. The UE 702 may be simultaneously connected with a plurality of cells provided by the same or different ANs of the RAN 704. For example, the UE 702 and RAN 704 may use carrier aggregation to allow the UE 702 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 704 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 702 or AN 708 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 704 may be an LTE RAN 710 with eNBs, for example, eNB 712. The LTE RAN 710 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 704 may be an NG-RAN 714 with gNBs, for example, gNB 716, or ng-eNBs, for example, ng-eNB 718. The gNB 716 may connect with SG-enabled UEs using a 5G NR interface. The gNB 716 may connect with a 5G core through an NG interface, which may include an N2 interface or an N3 interface. The ng-eNB 718 may also connect with the 5G core through an NG interface, but may connect with a UE via an LTE air interface. The gNB 716 and the ng-eNB 718 may connect with each other over an Xn interface.

In some embodiments, the NG interface may be split into two parts, an NG user plane (NG-U) interface, which carries traffic data between the nodes of the NG-RAN 714 and a UPF 748 (e.g., N3 interface), and an NG control plane (NG-C) interface, which is a signaling interface between the nodes of the NG-RAN714 and an AMF 744 (e.g., N2 interface).

The NG-RAN 714 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 702 can be configured with multiple BWPs where each BWP configuration has a different SCS. When a BWP change is indicated to the UE 702, the SCS of the transmission is changed as well. Another use case example of BWP is related to power saving. In particular, multiple BWPs can be configured for the UE 702 with different amount of frequency resources (for example, PRBs) to support data transmission under different traffic loading scenarios. A BWP containing a smaller number of PRBs can be used for data transmission with small traffic load while allowing power saving at the UE 702 and in some cases at the gNB 716. A BWP containing a larger number of PRBs can be used for scenarios with higher traffic load.

The RAN 704 is communicatively coupled to CN 720 that includes network elements to provide various functions to support data and telecommunications services to customers/subscribers (for example, users of UE 702). The components of the CN 720 may be implemented in one physical node or separate physical nodes. In some embodiments, NFV may be utilized to virtualize any or all of the functions provided by the network elements of the CN 720 onto physical compute/storage resources in servers, switches, etc. A logical instantiation of the CN 720 may be referred to as a network slice, and a logical instantiation of a portion of the CN 720 may be referred to as a network sub-slice.

In some embodiments, the CN 720 may be an LTE CN 722, which may also be referred to as an EPC. The LTE CN 722 may include MME 724, SGW 726, SGSN 728, HSS 730, PGW 732, and PCRF 734 coupled with one another over interfaces (or "reference points") as shown. Functions of the elements of the LTE CN 722 may be briefly introduced as follows.

The MME 724 may implement mobility management functions to track a current location of the UE 702 to facilitate paging, bearer activation/deactivation, handovers, gateway selection, authentication, etc.

The SGW 726 may terminate an S1 interface toward the RAN and route data packets between the RAN and the LTE CN 722. The SGW 726 may be a local mobility anchor point for inter-RAN node handovers and also may provide an anchor for inter-3GPP mobility. Other responsibilities may include lawful intercept, charging, and some policy enforcement.

The SGSN 728 may track a location of the UE 702 and perform security functions and access control. In addition, the SGSN 728 may perform inter-EPC node signaling for mobility between different RAT networks; PDN and S-GW selection as specified by MME 724; MME selection for handovers; etc. The S3 reference point between the MME 724 and the SGSN 728 may enable user and bearer information exchange for inter-3GPP access network mobility in idle/active states.

The HSS 730 may include a database for network users, including subscription-related information to support the network entities' handling of communication sessions. The HSS 730 can provide support for routing/roaming, authentication, authorization, naming/addressing resolution, location dependencies, etc. An S6a reference point between the HSS 730 and the MME 724 may enable transfer of subscription and authentication data for authenticating/authorizing user access to the LTE CN 720.

The PGW 732 may terminate an SGi interface toward a data network (DN) 736 that may include an application/content server 738. The PGW 732 may route data packets between the LTE CN 722 and the data network 736. The PGW 732 may be coupled with the SGW 726 by an S5 reference point to facilitate user plane tunneling and tunnel management. The PGW 732 may further include a node for policy enforcement and charging data collection (for example, PCEF). Additionally, the SGi reference point between the PGW 732 and the data network 7 36 may be an operator external public, a private PDN, or an intra-operator packet data network, for example, for provision of IMS services. The PGW 732 may be coupled with a PCRF 734 via a Gx reference point.

The PCRF 734 is the policy and charging control element of the LTE CN 722. The PCRF 734 may be communicatively coupled to the app/content server 738 to determine appropriate QoS and charging parameters for service flows. The PCRF 732 may provision associated rules into a PCEF (via Gx reference point) with appropriate TFT and QCI.

In some embodiments, the CN 720 may be a 5GC 740. The 5GC 740 may include an AUSF 742, AMF 744, SMF 746, UPF 748, NSSF 750, NEF 752, NRF 754, PCF 756, UDM 758, and AF 760 coupled with one another over interfaces (or "reference points") as shown. Functions of the elements of the 5GC 740 may be briefly introduced as follows.

The AUSF 742 may store data for authentication of UE 702 and handle authentication-related functionality. The AUSF 742 may facilitate a common authentication framework for various access types. In addition to communicating with other elements of the 5GC 740 over reference points as shown, the AUSF 742 may exhibit an Nausf service-based interface.

The AMF 744 may allow other functions of the 5GC 740 to communicate with the UE 702 and the RAN 704 and to subscribe to notifications about mobility events with respect to the UE 702. The AMF 744 may be responsible for registration management (for example, for registering UE 702), connection management, reachability management, mobility management, lawful interception of AMF-related events, and access authentication and authorization. The AMF 744 may provide transport for SM messages between the UE 702 and the SMF 746, and act as a transparent proxy for routing SM messages. AMF 744 may also provide transport for SMS messages between UE 702 and an SMSF. AMF 744 may interact with the AUSF 742 and the UE 702 to perform various security anchor and context management functions. Furthermore, AMF 744 may be a termination point of a RAN CP interface, which may include or be an N2 reference point between the RAN 704 and the AMF 744; and the AMF 744 may be a termination point of NAS (N1) signaling, and perform NAS ciphering and integrity protection. AMF 744 may also support NAS signaling with the UE 702 over an N3 IWF interface.

The SMF 746 may be responsible for SM (for example, session establishment, tunnel management between UPF 748 and AN 708); UE IP address allocation and management (including optional authorization); selection and control of UP function; configuring traffic steering at UPF 748 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 744 over N2 to AN 708; and determining SSC mode of a session. SM may refer to management of a PDU session, and a PDU session or "session" may refer to a PDU connectivity service that provides or enables the exchange of PDUs between the UE 702 and the data network 736.

The UPF 748 may act as an anchor point for intra-RAT and inter-RAT mobility, an external PDU session point of interconnect to data network 736, and a branching point to support multi-homed PDU session. The UPF 748 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 748 may include an uplink classifier to support routing traffic flows to a data network.

The NSSF 750 may select a set of network slice instances serving the UE 702. The NSSF 750 may also determine allowed NSSAI and the mapping to the subscribed S-NSSAIs, if needed. The NSSF 750 may also determine the AMF set to be used to serve the UE 702, or a list of candidate AMFs based on a suitable configuration and possibly by querying the NRF 754. The selection of a set of network slice instances for the UE 702 may be triggered by the AMF 744 with which the UE 702 is registered by interacting with the NSSF 750, which may lead to a change of AMF. The NSSF 750 may interact with the AMF 744 via an N22 reference point; and may communicate with another NSSF in a visited network via an N31 reference point (not shown). Additionally, the NSSF 750 may exhibit an Nnssf service-based interface.

The NEF 752 may securely expose services and capabilities provided by 3GPP network functions for third party, internal exposure/re-exposure, AFs (e.g., AF 760), edge computing or fog computing systems, etc. In such embodiments, the NEF 752 may authenticate, authorize, or throttle the AFs. NEF 752 may also translate information exchanged with the AF 760 and information exchanged with internal network functions. For example, the NEF 752 may translate between an AF-Service-Identifier and an internal 5GC information. NEF 752 may also receive information from other NFs based on exposed capabilities of other NFs. This information may be stored at the NEF 752 as structured data, or at a data storage NF using standardized interfaces. The stored information can then be re-exposed by the NEF 752 to other NFs and AFs, or used for other purposes such as analytics. Additionally, the NEF 752 may exhibit an Nnef service-based interface.

The NRF 754 may support service discovery functions, receive NF discovery requests from NF instances, and provide the information of the discovered NF instances to the NF instances. NRF 754 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 754 may exhibit the Nnrf service-based interface.

The PCF 756 may provide policy rules to control plane functions to enforce them, and may also support unified policy framework to govern network behavior. The PCF 756 may also implement a front end to access subscription information relevant for policy decisions in a UDR of the UDM 758. In addition to communicating with functions over reference points as shown, the PCF 756 exhibit an Npcf service-based interface.

The UDM 758 may handle subscription-related information to support the network entities' handling of communication sessions, and may store subscription data of UE 702. For example, subscription data may be communicated via an N8 reference point between the UDM 758 and the AMF 744. The UDM 758 may include two parts, an application front end and a UDR. The UDR may store subscription data and policy data for the UDM 758 and the PCF 756, and/or structured data for exposure and application data (including PFDs for application detection, application request information for multiple UEs 702) for the NEF 752. The Nudr service-based interface may be exhibited by the UDR 221 to allow the UDM 758, PCF 756, and NEF 752 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 758 may exhibit the Nudm service-based interface.

The AF 760 may provide application influence on traffic routing, provide access to NEF, and interact with the policy framework for policy control.

In some embodiments, the 5GC 740 may enable edge computing by selecting operator/3^{rd} party services to be geographically close to a point that the UE 702 is attached to the network. This may reduce latency and load on the network. To provide edge-computing implementations, the 5GC 740 may select a UPF 748 close to the UE 702 and execute traffic steering from the UPF 748 to data network 736 via the N6 interface. This may be based on the UE subscription data, UE location, and information provided by the AF 760. In this way, the AF 760 may influence UPF (re)selection and traffic routing. Based on operator deployment, when AF 760 is considered to be a trusted entity, the network operator may permit AF 760 to interact directly with relevant NFs. Additionally, the AF 760 may exhibit an Naf service-based interface.

The data network 736 may represent various network operator services, Internet access, or third party services that may be provided by one or more servers including, for example, application/content server 738.

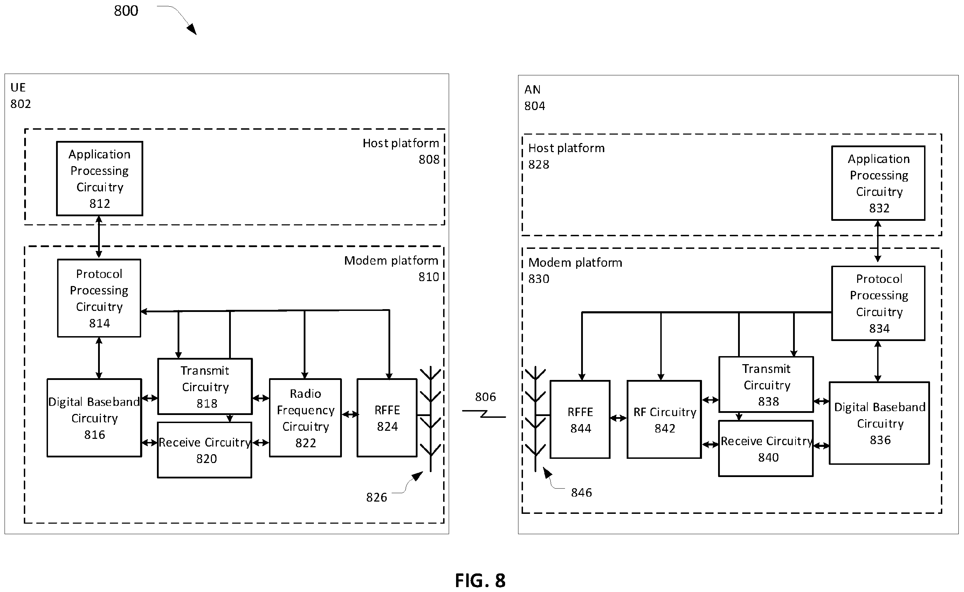

FIG. 8 schematically illustrates a wireless network 800 in accordance with various embodiments. The wireless network 800 may include a UE 802 in wireless communication with an AN 804. The UE 802 and AN 804 may be similar to, and substantially interchangeable with, like-named components described elsewhere herein.

The UE 802 may be communicatively coupled with the AN 804 via connection 806. The connection 806 is illustrated as an air interface to enable communicative coupling, and can be consistent with cellular communications protocols such as an LTE protocol or a 5G NR protocol operating at mmWave or sub-6GHz frequencies.

The UE 802 may include a host platform 808 coupled with a modem platform 810. The host platform 808 may include application processing circuitry 812, which may be coupled with protocol processing circuitry 814 of the modem platform 810. The application processing circuitry 812 may run various applications for the UE 802 that source/sink application data. The application processing circuitry 812 may further implement one or more layer operations to transmit/receive application data to/from a data network. These layer operations may include transport (for example UDP) and Internet (for example, IP) operations

The protocol processing circuitry 814 may implement one or more of layer operations to facilitate transmission or reception of data over the connection 806. The layer operations implemented by the protocol processing circuitry 814 may include, for example, MAC, RLC, PDCP, RRC and NAS operations.

The modem platform 810 may further include digital baseband circuitry 816 that may implement one or more layer operations that are "below" layer operations performed by the protocol processing circuitry 814 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 810 may further include transmit circuitry 818, receive circuitry 820, RF circuitry 822, and RF front end (RFFE) 824, which may include or connect to one or more antenna panels 826. Briefly, the transmit circuitry 818 may include a digital-to-analog converter, mixer, intermediate frequency (IF) components, etc.; the receive circuitry 820 may include an analog-to-digital converter, mixer, IF components, etc.; the RF circuitry 822 may include a low-noise amplifier, a power amplifier, power tracking components, etc.; RFFE 824 may include filters (for example, surface/bulk acoustic wave filters), switches, antenna tuners, beamforming components (for example, phase-array antenna components), etc. The selection and arrangement of the components of the transmit circuitry 818, receive circuitry 820, RF circuitry 822, RFFE 824, and antenna panels 826 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 814 may include one or more instances of control circuitry (not shown) to provide control functions for the transmit/receive components.

A UE reception may be established by and via the antenna panels 826, RFFE 824, RF circuitry 822, receive circuitry 820, digital baseband circuitry 816, and protocol processing circuitry 814. In some embodiments, the antenna panels 826 may receive a transmission from the AN 804 by receive-beamforming signals received by a plurality of antennas/antenna elements of the one or more antenna panels 826.

A UE transmission may be established by and via the protocol processing circuitry 814, digital baseband circuitry 816, transmit circuitry 818, RF circuitry 822, RFFE 824, and antenna panels 826. In some embodiments, the transmit components of the UE 804 may apply a spatial filter to the data to be transmitted to form a transmit beam emitted by the antenna elements of the antenna panels 826.

Similar to the UE 802, the AN 804 may include a host platform 828 coupled with a modem platform 830. The host platform 828 may include application processing circuitry 832 coupled with protocol processing circuitry 834 of the modem platform 830. The modem platform may further include digital baseband circuitry 836, transmit circuitry 838, receive circuitry 840, RF circuitry 842, RFFE circuitry 844, and antenna panels 846. The components of the AN 804 may be similar to and substantially interchangeable with like-named components of the UE 802. In addition to performing data transmission/reception as described above, the components of the AN 808 may perform various logical functions that include, for example, RNC functions such as radio bearer management, uplink and downlink dynamic radio resource management, and data packet scheduling.

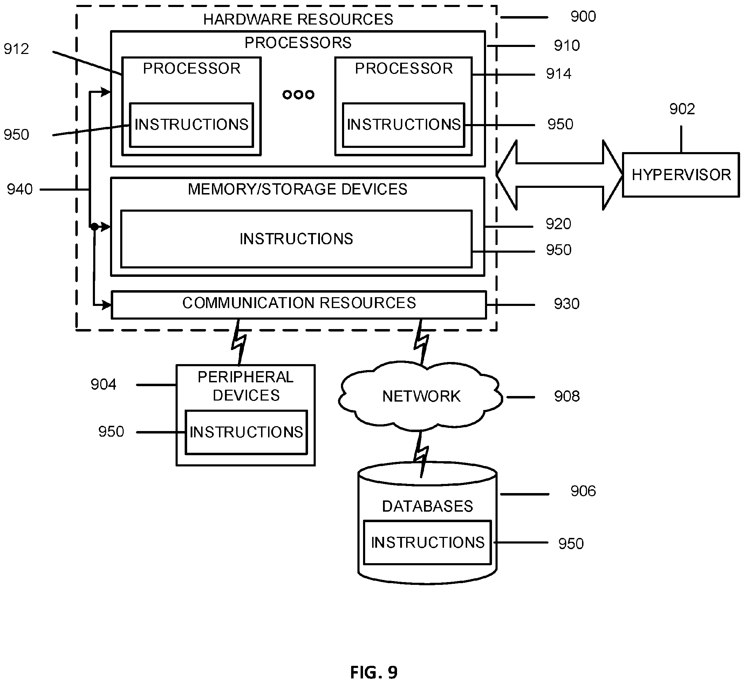

FIG. 9 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 9 shows a diagrammatic representation of hardware resources 900 including one or more processors (or processor cores) 910, one or more memory/storage devices 920, and one or more communication resources 930, each of which may be communicatively coupled via a bus 940 or other interface circuitry. For embodiments where node virtualization (e.g., NFV) is utilized, a hypervisor 902 may be executed to provide an execution environment for one or more network slices/sub-slices to utilize the hardware resources 900.

The processors 910 may include, for example, a processor 912 and a processor 914. The processors 910 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 920 may include main memory, disk storage, or any suitable combination thereof. The memory/storage devices 920 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 930 may include interconnection or network interface controllers, components, or other suitable devices to communicate with one or more peripheral devices 904 or one or more databases 906 or other network elements via a network 908. For example, the communication resources 930 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 950 may comprise software, a program, an application, an applet, an app, or other executable code for causing at least any of the processors 910 to perform any one or more of the methodologies discussed herein. The instructions 950 may reside, completely or partially, within at least one of the processors 910 (e.g., within the processor's cache memory), the memory/storage devices 920, or any suitable combination thereof. Furthermore, any portion of the instructions 950 may be transferred to the hardware resources 900 from any combination of the peripheral devices 904 or the databases 906. Accordingly, the memory of processors 910, the memory/storage devices 920, the peripheral devices 904, and the databases 906 are examples of computer-readable and machine-readable media.

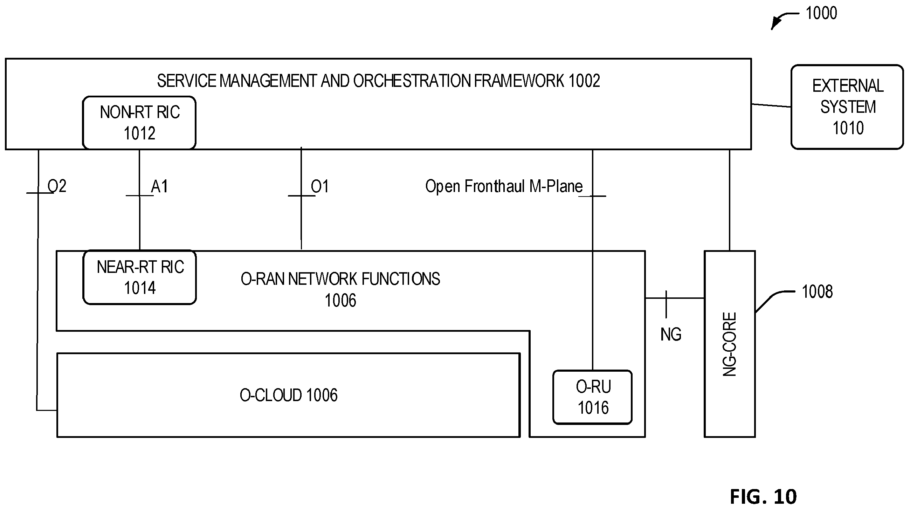

FIG. 10 provides a high-level view of an Open RAN (O-RAN) architecture 1000. The O-RAN architecture 1000 includes four O-RAN defined interfaces - namely, the A1 interface, the O1 interface, the O2 interface, and the Open Fronthaul Management (M)-plane interface - which connect the Service Management and Orchestration (SMO) framework 1002 to O-RAN network functions (NFs) 1004 and the O-Cloud 1006. The SMO 1002 (described in [O13]) also connects with an external system 1010, which provides enrichment data to the SMO 1002. FIG. 10 also illustrates that the A1 interface terminates at an O-RAN Non-Real Time (RT) RAN Intelligent Controller (RIC) 1012 in or at the SMO 1002 and at the O-RAN Near-RT RIC 1014 in or at the O-RAN NFs 1004. The O-RAN NFs 1004 can be VNFs such as VMs or containers, sitting above the O-Cloud 1006 and/or Physical Network Functions (PNFs) utilizing customized hardware. All O-RAN NFs 1004 are expected to support the O1 interface when interfacing the SMO framework 1002.The O-RAN NFs 1004 connect to the NG-Core 1008 via the NG interface (which is a 3GPP defined interface). The Open Fronthaul M-plane interface between the SMO 1002 and the O-RAN Radio Unit (O-RU) 1016 supports the O-RU 1016 management in the O-RAN hybrid model as specified in [O16]. The Open Fronthaul M-plane interface is an optional interface to the SMO 1002 that is included for backward compatibility purposes as per [O16], and is intended for management of the O-RU 1016 in hybrid mode only. The management architecture of flat mode [O12] and its relation to the O1 interface for the O-RU 1016 is for future study. The O-RU 1016 termination of the O1 interface towards the SMO 1002 as specified in [O12].

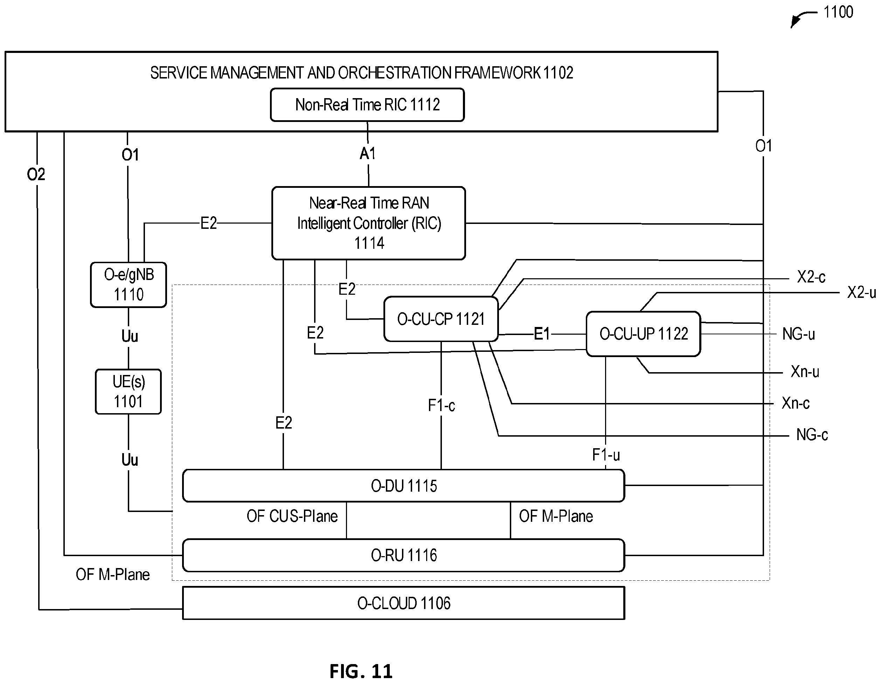

FIG. 11 shows an O-RAN logical architecture 1100 corresponding to the O-RAN architecture 1000 of FIG. 10. In FIG. 11, the SMO 1102 corresponds to the SMO 1002, O-Cloud 1106 corresponds to the O-Cloud 1006, the non-RT RIC 1112 corresponds to the non-RT RIC 1012, the near-RT RIC 1114 corresponds to the near-RT RIC 1014, and the O-RU 1116 corresponds to the O-RU 1016 of FIG. 11, respectively. The O-RAN logical architecture 1100 includes a radio portion and a management portion.

The management portion/side of the architectures 1100 includes the SMO Framework 1102 containing the non-RT RIC 1112, and may include the O-Cloud 1106. The O-Cloud 1106 is a cloud computing platform including a collection of physical infrastructure nodes to host the relevant O-RAN functions (e.g., the near-RT RIC 1114, O-CU-CP 1121, O-CU-UP 1122, and the O-DU 1115), supporting software components (e.g., OSs, VMMs, container runtime engines, ML engines, etc.), and appropriate management and orchestration functions.

The radio portion/side of the logical architecture 1100 includes the near-RT RIC 1114, the O-RAN Distributed Unit (O-DU) 1115, the O-RU 1116, the O-RAN Central Unit - Control Plane (O-CU-CP) 1121, and the O-RAN Central Unit - User Plane (O-CU-UP) 1122 functions. The radio portion/side of the logical architecture 1100 may also include the O-e/gNB 1110.

The O-DU 1115 is a logical node hosting RLC, MAC, and higher PHY layer entities/elements (High-PHY layers) based on a lower layer functional split. The O-RU 1116 is a logical node hosting lower PHY layer entities/elements (Low-PHY layer) (e.g., FFT/iFFT, PRACH extraction, etc.) and RF processing elements based on a lower layer functional split. Virtualization of O-RU 1116 is FFS. The O-CU-CP 1121 is a logical node hosting the RRC and the control plane (CP) part of the PDCP protocol. The O O-CU-UP 1122 is a logical node hosting the user plane part of the PDCP protocol and the SDAP protocol.

An E2 interface terminates at a plurality of E2 nodes. The E2 nodes are logical nodes/entities that terminate the E2 interface. For NR/5G access, the E2 nodes include the O-CU-CP 1121, O-CU-UP 1122, O-DU 1115, or any combination of elements as defined in [O15]. For E-UTRA access, the E2 nodes include the O-e/gNB 1110. As shown in FIG. 11, the E2 interface also connects the O-e/gNB 1110 to the Near-RT RIC 1114. The protocols over E2 interface are based exclusively on Control Plane (CP) protocols. The E2 functions are grouped into the following categories: (a) near-RT RIC 1114 services (REPORT, INSERT, CONTROL and POLICY, as described in [O15]); and (b) near-RT RIC 1114 support functions, which include E2 Interface Management (E2 Setup, E2 Reset, Reporting of General Error Situations, etc.) and Near-RT RIC Service Update (e.g., capability exchange related to the list of E2 Node functions exposed over E2).

FIG. 11 shows the Uu interface between a UE 1101 and O-e/gNB 1110 as well as between the UE 1101 and O-RAN components. The Uu interface is a 3GPP defined interface (see e.g., sections 5.2 and 5.3 of [O07]), which includes a complete protocol stack from L1 to L3 and terminates in the NG-RAN or E-UTRAN. The O-e/gNB 1110 is an LTE eNB [O04], a 5G gNB or ng-eNB [O06] that supports the E2 interface. The O-e/gNB 1110 may be the same or similar as AN 708 and/or AN 804 discussed previously. The UE 1101 may correspond to UE 702 and/or UE 802 discussed with respect to FIGs. 7 and 8, and/or the like. There may be multiple UEs 1101 and/or multiple O-e/gNB 1110, each of which may be connected to one another the via respective Uu interfaces. Although not shown in FIG. 11, the O-e/gNB 1110 supports O-DU 1115 and O-RU 1116 functions with an Open Fronthaul interface between them.

The Open Fronthaul (OF) interface(s) is/are between O-DU 1115 and O-RU 1116 functions [O16] [O17]. The OF interface(s) includes the Control User Synchronization (CUS) Plane and Management (M) Plane. FIGs. 10 and 11 also show that the O-RU 1116 terminates the OF M-Plane interface towards the O-DU 1115 and optionally towards the SMO 1102 as specified in [O16]. The O-RU 1116 terminates the OF CUS-Plane interface towards the O-DU 1115 and the SMO 1102.

The F1-c interface connects the O-CU-CP 1121 with the O-DU 1115. As defined by 3GPP, the F1-c interface is between the gNB-CU-CP and gNB-DU nodes [O07] [O10]. However, for purposes of O-RAN, the F1-c interface is adopted between the O-CU-CP 1121 with the O-DU 1115 functions while reusing the principles and protocol stack defined by 3GPP and the definition of interoperability profile specifications.

The F1-u interface connects the O-CU-UP 1122 with the O-DU 1115. As defined by 3GPP, the F1-u interface is between the gNB-CU-UP and gNB-DU nodes [O07] [O10]. However, for purposes of O-RAN, the F1-u interface is adopted between the O-CU-UP 1122 with the O-DU 1115 functions while reusing the principles and protocol stack defined by 3GPP and the definition of interoperability profile specifications.

The NG-c interface is defined by 3GPP as an interface between the gNB-CU-CP and the AMF in the SGC [O06]. The NG-c is also referred as the N2 interface (see [O06]). The NG-u interface is defined by 3GPP, as an interface between the gNB-CU-UP and the UPF in the SGC [O06]. The NG-u interface is referred as the N3 interface (see [O06]). In O-RAN, NG-c and NG-u protocol stacks defined by 3GPP are reused and may be adapted for O-RAN purposes.

The X2-c interface is defined in 3GPP for transmitting control plane information between eNBs or between eNB and en-gNB in EN-DC. The X2-u interface is defined in 3GPP for transmitting user plane information between eNBs or between eNB and en-gNB in EN-DC (see e.g., [O05], [O06]). In O-RAN, X2-c and X2-u protocol stacks defined by 3GPP are reused and may be adapted for O-RAN purposes

The Xn-c interface is defined in 3GPP for transmitting control plane information between gNBs, ng-eNBs, or between an ng-eNB and gNB. The Xn-u interface is defined in 3GPP for transmitting user plane information between gNBs, ng-eNBs, or between ng-eNB and gNB (see e.g., [O06], [O08]). In O-RAN, Xn-c and Xn-u protocol stacks defined by 3GPP are reused and may be adapted for O-RAN purposes

The E1 interface is defined by 3GPP as being an interface between the gNB-CU-CP (e.g., gNB-CU-CP 3728) and gNB-CU-UP (see e.g., [O07], [O09]). In O-RAN, E1 protocol stacks defined by 3GPP are reused and adapted as being an interface between the O-CU-CP 1121 and the O-CU-UP 1122 functions.

The O-RAN Non-Real Time (RT) RAN Intelligent Controller (RIC) 1112 is a logical function within the SMO framework 1002, 1102 that enables non-real-time control and optimization of RAN elements and resources; AI/machine learning (ML) workflow(s) including model training, inferences, and updates; and policy-based guidance of applications/features in the Near-RT RIC 1114.

The O-RAN near-RT RIC 1114 is a logical function that enables near-real-time control and optimization of RAN elements and resources via fine-grained data collection and actions over the E2 interface. The near-RT RIC 1114 may include one or more AI/ML workflows including model training, inferences, and updates.

The non-RT RIC 1112 can be an ML training host to host the training of one or more ML models. ML training can be performed offline using data collected from the RIC, O-DU 1115 and O-RU 1116. For supervised learning, non-RT RIC 1112 is part of the SMO 1102, and the ML training host and/or ML model host/actor can be part of the non-RT RIC 1112 and/or the near-RT RIC 1114. For unsupervised learning, the ML training host and ML model host/actor can be part of the non-RT RIC 1112 and/or the near-RT RIC 1114. For reinforcement learning, the ML training host and ML model host/actor may be co-located as part of the non-RT RIC 1112 and/or the near-RT RIC 1114. In some implementations, the non-RT RIC 1112 may request or trigger ML model training in the training hosts regardless of where the model is deployed and executed. ML models may be trained and not currently deployed.

In some implementations, the non-RT RIC 1112 provides a query-able catalog for an ML designer/developer to publish/install trained ML models (e.g., executable software components). In these implementations, the non-RT RIC 1112 may provide discovery mechanism if a particular ML model can be executed in a target ML inference host (MF), and what number and type of ML models can be executed in the MF. For example, there may be three types of ML catalogs made discoverable by the non-RT RIC 1112: a design-time catalog (e.g., residing outside the non-RT RIC 1112 and hosted by some other ML platform(s)), a training/deployment-time catalog (e.g., residing inside the non-RT RIC 1112), and a runtime catalog (e.g., residing inside the non-RT RIC 1112). The non-RT RIC 1112 supports necessary capabilities for ML model inference in support of ML assisted solutions running in the non-RT RIC 1112 or some other ML inference host. These capabilities enable executable software to be installed such as VMs, containers, etc. The non-RT RIC 1112 may also include and/or operate one or more ML engines, which are packaged software executable libraries that provide methods, routines, data types, etc., used to run ML models. The non-RT RIC 1112 may also implement policies to switch and activate ML model instances under different operating conditions.

The non-RT RIC 112 is be able to access feedback data (e.g., FM and PM statistics) over the O1 interface on ML model performance and perform necessary evaluations. If the ML model fails during runtime, an alarm can be generated as feedback to the non-RT RIC 1112. How well the ML model is performing in terms of prediction accuracy or other operating statistics it produces can also be sent to the non-RT RIC 1112 over O1. The non-RT RIC 1112 can also scale ML model instances running in a target MF over the O1 interface by observing resource utilization in MF. The environment where the ML model instance is running (e.g., the MF) monitors resource utilization of the running ML model. This can be done, for example, using an ORAN-SC component called *ResourceMonitor* in the near-RT RIC 1114 and/or in the non-RT RIC 1112, which continuously monitors resource utilization. If resources are low or fall below a certain threshold, the runtime environment in the near-RT RIC 1114 and/or the non-RT RIC 1112 provides a scaling mechanism to add more ML instances. The scaling mechanism may include a scaling factor such as an number, percentage, and/or other like data used to scale up/down the number of ML instances. ML model instances running in the target ML inference hosts may be automatically scaled by observing resource utilization in the MF. For example, the Kubernetes^{®} (K8s) runtime environment typically provides an auto-scaling feature.

The A1 interface is between the non-RT RIC 1112 (within or outside the SMO 1102) and the near-RT RIC 1114. The A1 interface supports three types of services as defined in [O14], including a Policy Management Service, an Enrichment Information Service, and ML Model Management Service. A1 policies have the following characteristics compared to persistent configuration [O14]: A1 policies are not critical to traffic; A1 policies have temporary validity; A1 policies may handle individual UE or dynamically defined groups of UEs; A1 policies act within and take precedence over the configuration; and A1 policies are non-persistent, e.g., do not survive a restart of the near-RT RIC.

### REFERENCES

[O04] 3GPP TS 36.401 v15.1.0 (2019-01-09).
[O05] 3GPP TS 36.420 v152.0 (2020-01-09).
[O06] 3GPP TS 38.300 v16.0.0 (2020-01-08).
[O07] 3GPP TS 38.401 v16.0.0 (2020-01-09).
[O08] 3GPP TS 38.420 v15.2.0 (2019-01-08).
[O09] 3GPP TS 38.460 v16.0.0 (2020-01-09).
[O10] 3GPP TS 38.470 v16.0.0 (2020-01-09).
[O12] O-RAN Alliance Working Group 1, O-RAN Operations and Maintenance Architecture Specification, version 2.0 (Dec 2019) ("O-RAN-WG1.OAM-Architecture-v02.00").
[O13] O-RAN Alliance Working Group 1, O-RAN Operations and Maintenance Interface Specification, version 2.0 (Dec 2019) ("O-RAN-WG1.O1-Interface-v02.00").
[O14] O-RAN Alliance Working Group 2, O-RAN A1 interface: General Aspects and Principles Specification, version 1.0 (Oct 2019) ("ORAN-WG2.A1.GA&P-v01.00").
[O15] O-RAN Alliance Working Group 3, Near-Real-time RAN Intelligent Controller Architecture & E2 General Aspects and Principles ("ORAN-WG3.E2GAP.0-v0.1").
[O16] O-RAN Alliance Working Group 4, O-RAN Fronthaul Management Plane Specification, version 2.0 (July 2019) ("ORAN-WG4.MP.0-v02.00.00").
[O17] O-RAN Alliance Working Group 4, O-RAN Fronthaul Control, User and Synchronization Plane Specification, version 2.0 (July 2019) ("ORAN-WG4.CUS.0-v02.00").

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include in one embodiment, the A1 EI related function enables one or more of the following functionalities in the Non-RT RIC framework:
- It produces A1 EI related service. Service consumer can register, update, and deregister EI types
   ∘ rApps can consume the A1 EI related service via the R1 interface.
   ∘ External enrichment information sources can consume the A1 EI related serivce.
- It collects EI results for created EI jobs.
   ∘ A1 EI related function collects EI data by consuming the data management and exposure services.
- It interfaces with Near-RT RICs through A1 interface
   ∘ A1 EI related function exposes discoverable EI types and detailed description of EI types to the Near-RT RIC, when the Near-RT RIC queries available EI types.
   ∘ A1 EI related function receives EI job creation, update, query, and deletion requests from the Near-RT RIC.
   ∘ A1 EI related function receives EI job statues query from the Near-RT RIC, and it notifies EI status to the Near-RT RIC.
   ∘ A1 EI related function sets up connection with the Near-RT RIC and delivers EI job results to the Near-RT RIC.

Example 2 may include one embodiment, the A1 EI related function is implemented as part of the A1 related functions in the Non-RT RIC framework. The A1 EI related service exposed to rApps are part of the A1 related services, which is regarded as one of the R1 services exposed over the R1 interface.

Example 3 may include A1 EI related service consumer registers it produced EI types to the A1 EI related function in the Non-RT RIC. In one embodiment, the service consumer uses HTTP POST method to request EI type registration. For example, the message body contains an eiTypeObject.

Example 4 may include the eiTypeObject contains information of the registered EI type, including
- Information for the A1 EI related function to fetch EI results from DME functions in the Non-RT RIC, e.g. registered EI data type in DME.
- Information exposed to the Near-RT RIC via A1 interface, if any.

Example 5 may include after receiving registration request from service consumer, the A1 EI related function responds to the service consumer indicating whether the registration is successful or not. If the registration is successful, an identification is assigned to registered EI type. In the message body of HTTP response contains the created eiTypeObject. If the registration is failed, proper error code is sent back to the service consumer.

Example 6 may include A1 EI related service consumer updates registered EI types to the A1 EI related function in the Non-RT RIC. In one embodiment, the service consumer uses HTTP PUT method using eiTypeId assigned to this EI type. The message body contains the updated eiTypeObject.

Example 7 may include after receiving registration update request from service consumer, the A1 EI related function responds to the service consumer indicating whether the update is successful or not. If the update is successful, the message body of HTTP response contains the updated eiTypeObject. If the update is failed, proper error code is sent back to the service consumer.

Example 8 may include A1 EI related service consumer deregisters registered EI types to the A1 EI related function in the Non-RT RIC. In one embodiment, the service consumer uses HTTP DELETE method using eiTypeId assigned to this EI type with empty message body.

Example 9 may include after receiving deregistration request from service consumer, the A1 EI related function responds to the service consumer indicating whether the deregistration is successful or not. If the update is successful, a HTTP response with empty message body is returned. If the update is failed, proper error code is sent back to the service consumer.

Example 10 may include based on the data type information contained in the registered eiTypeObject, A1 EI related functions send data type discovery request to the DME functions. If the rApp has already registered corresponding data type with the DME functions, DME functions expose the queried data type to the A1 EI related function.

Example 11 may include after successful discovery of the EI data type from the DME functions, A1 EI related functiony make the registered EI type discoverable to connected Near-RT RICs

Example 12 may include after Near-RT RIC creates EI jobs for discoverable EI type, A1 EI related function subscribes EI data from the DME functions, by consuming DME services. The DME functions deliver EI data to the A1 EI related function based on the subscription request.

Example 13 may include the DME functions collect EI data from rApp.

Example 14 may include after receiving EI data from the DME functions, A1 EI related function form EI job results using the received EI data, and it delivers EI job results to the Near-RT RIC using the A1-EI services.

Example 15 may include an apparatus comprising means to perform one or more elements of a method described in or related to any of examples 1-14, or any other method or process described herein.

Example 16 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 17 may include an apparatus comprising logic, modules, or circuitry to perform one or more elements of a method described in or related to any of examples 1-14, or any other method or process described herein.

Example 18 may include a method, technique, or process as described in or related to any of examples 1-14, or portions or parts thereof.

Example 19 may include an apparatus comprising: one or more processors and one or more computer-readable media comprising instructions that, when executed by the one or more processors, cause the one or more processors to perform the method, techniques, or process as described in or related to any of examples 1-14, or portions thereof.

Example 20 may include a signal as described in or related to any of examples 1-14, or portions or parts thereof.

Example 21 may include a datagram, packet, frame, segment, protocol data unit (PDU), or message as described in or related to any of examples 1-14, or portions or parts thereof, or otherwise described in the present disclosure.

Example 22 may include a signal encoded with data as described in or related to any of examples 1-14, or portions or parts thereof, or otherwise described in the present disclosure.

Example 23 may include a signal encoded with a datagram, packet, frame, segment, protocol data unit (PDU), or message as described in or related to any of examples 1-14, or portions or parts thereof, or otherwise described in the present disclosure.

Example 24 may include an electromagnetic signal carrying computer-readable instructions, wherein execution of the computer-readable instructions by one or more processors is to cause the one or more processors to perform the method, techniques, or process as described in or related to any of examples 1-14, or portions thereof.

Example 25 may include a computer program comprising instructions, wherein execution of the program by a processing element is to cause the processing element to carry out the method, techniques, or process as described in or related to any of examples 1-14, or portions thereof.

Example 26 may include a signal in a wireless network as shown and described herein.

Example 27 may include a method of communicating in a wireless network as shown and described herein.

Example 28 may include a system for providing wireless communication as shown and described herein.

Example 29 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

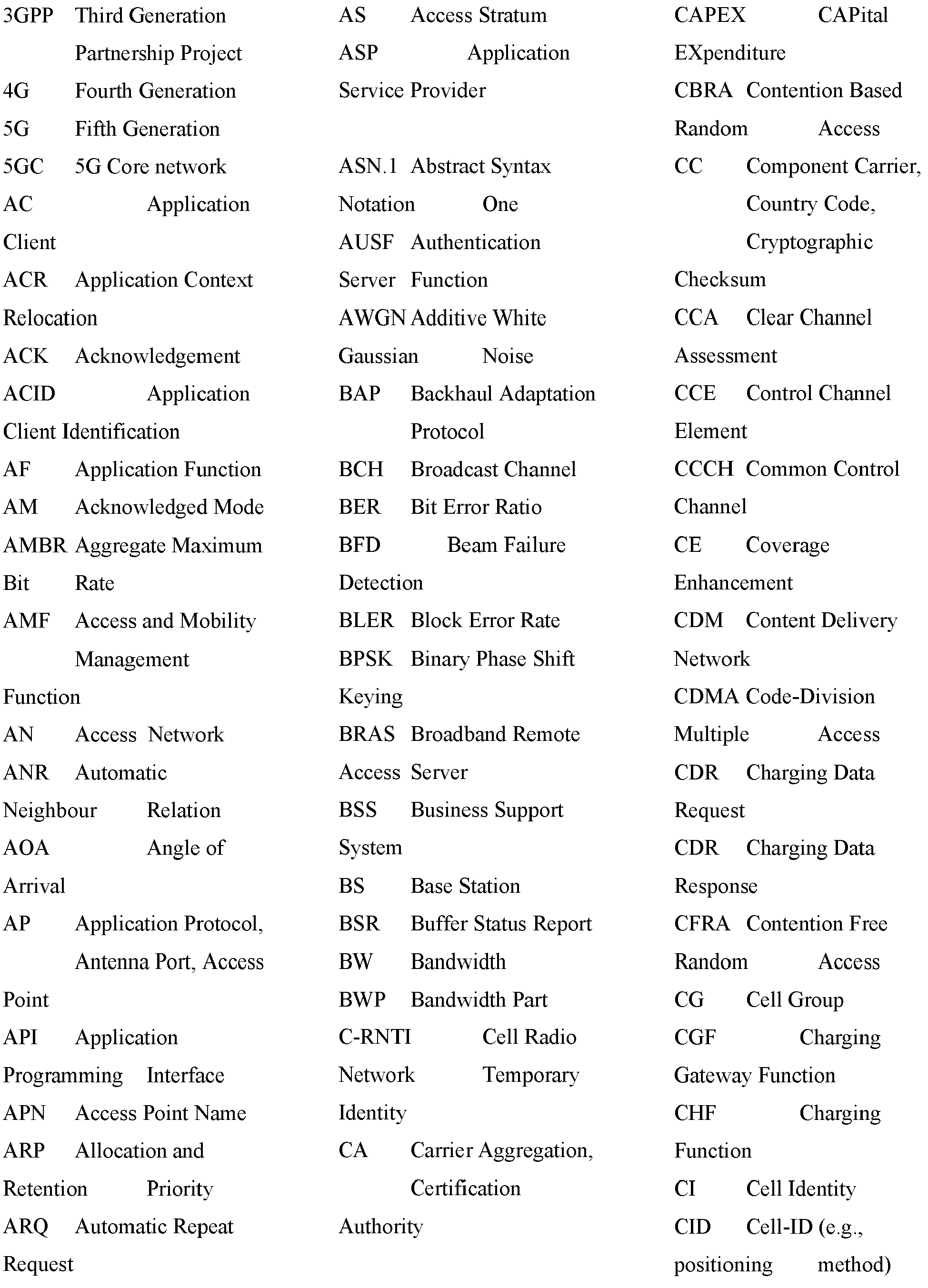

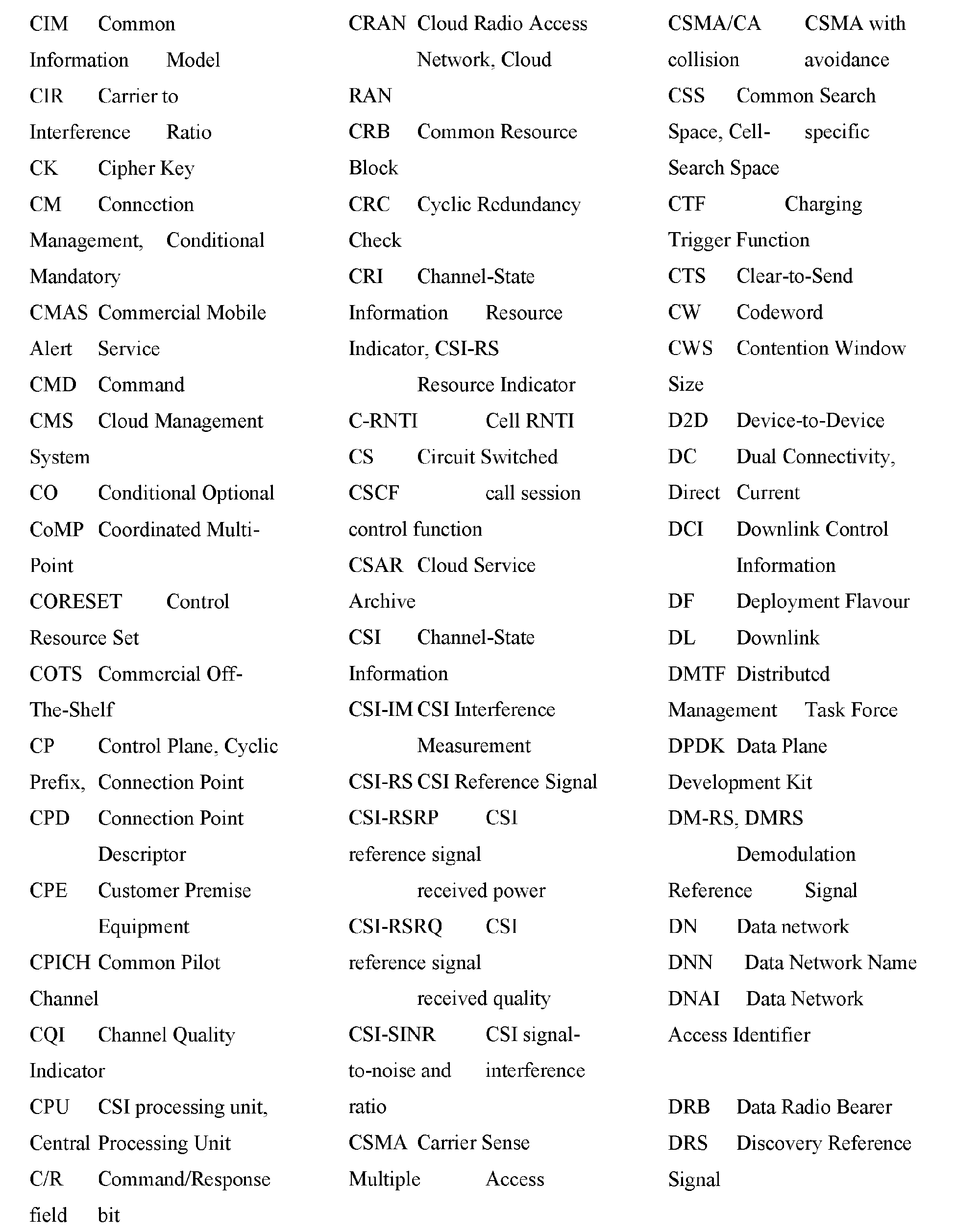

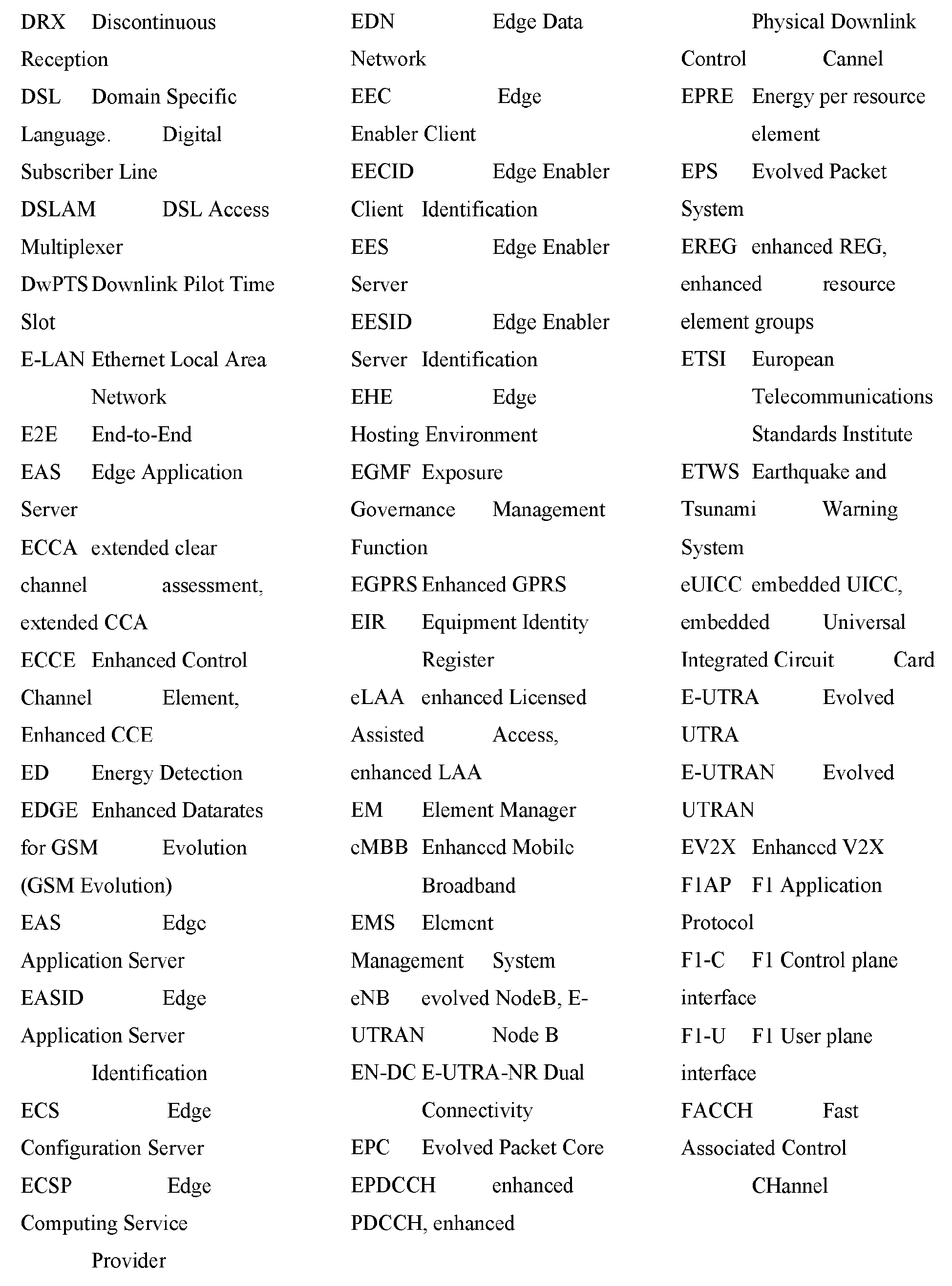

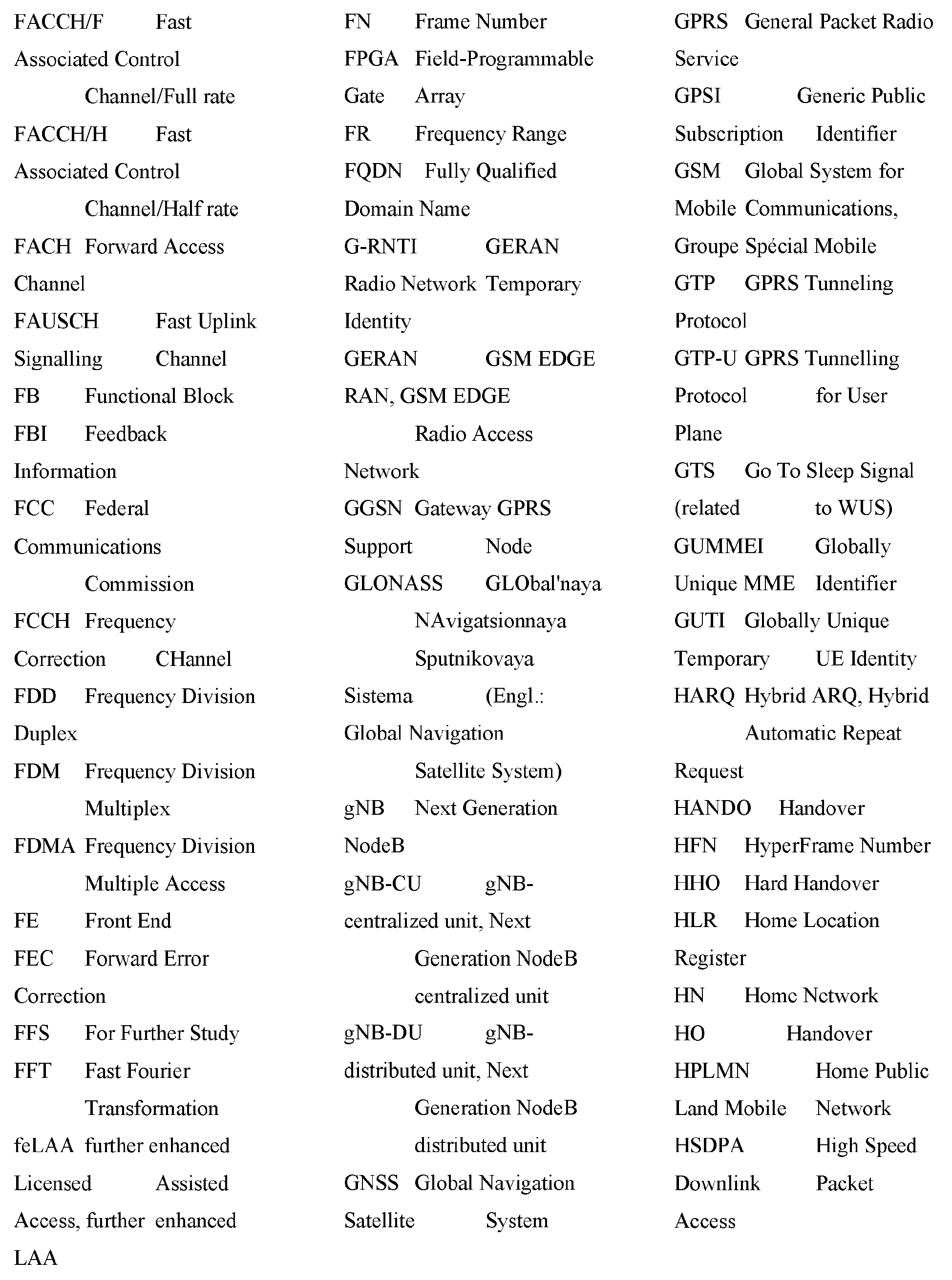

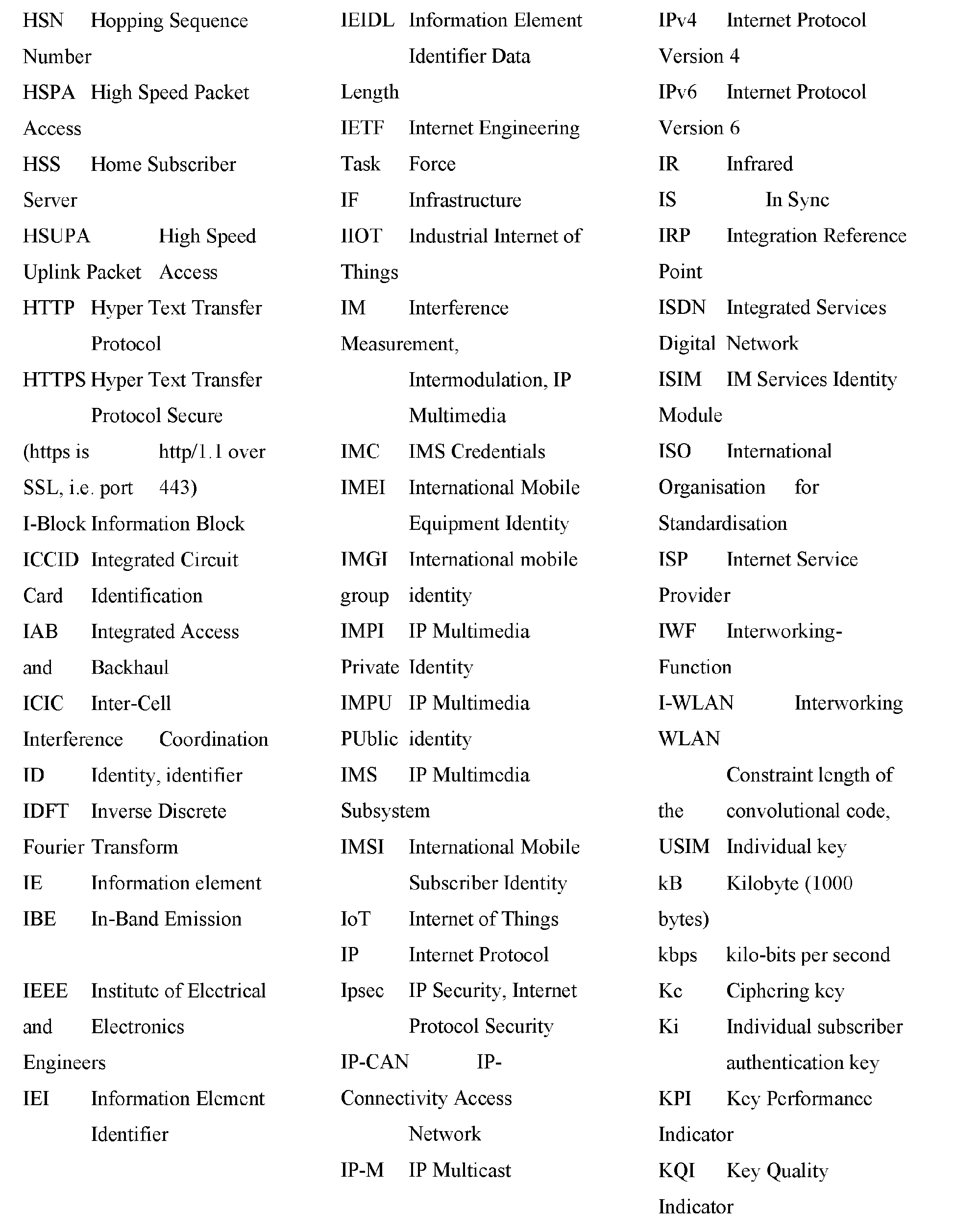

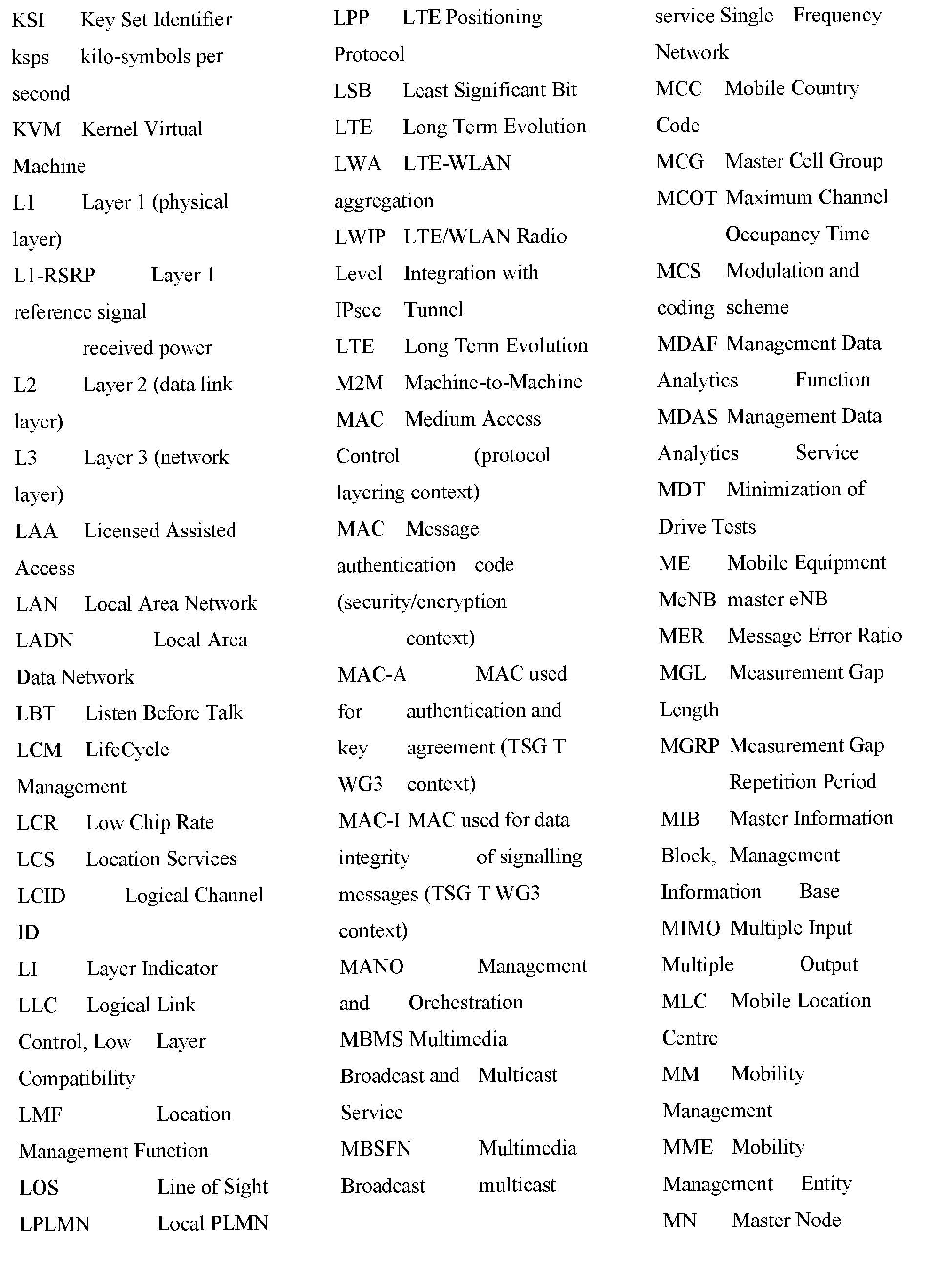

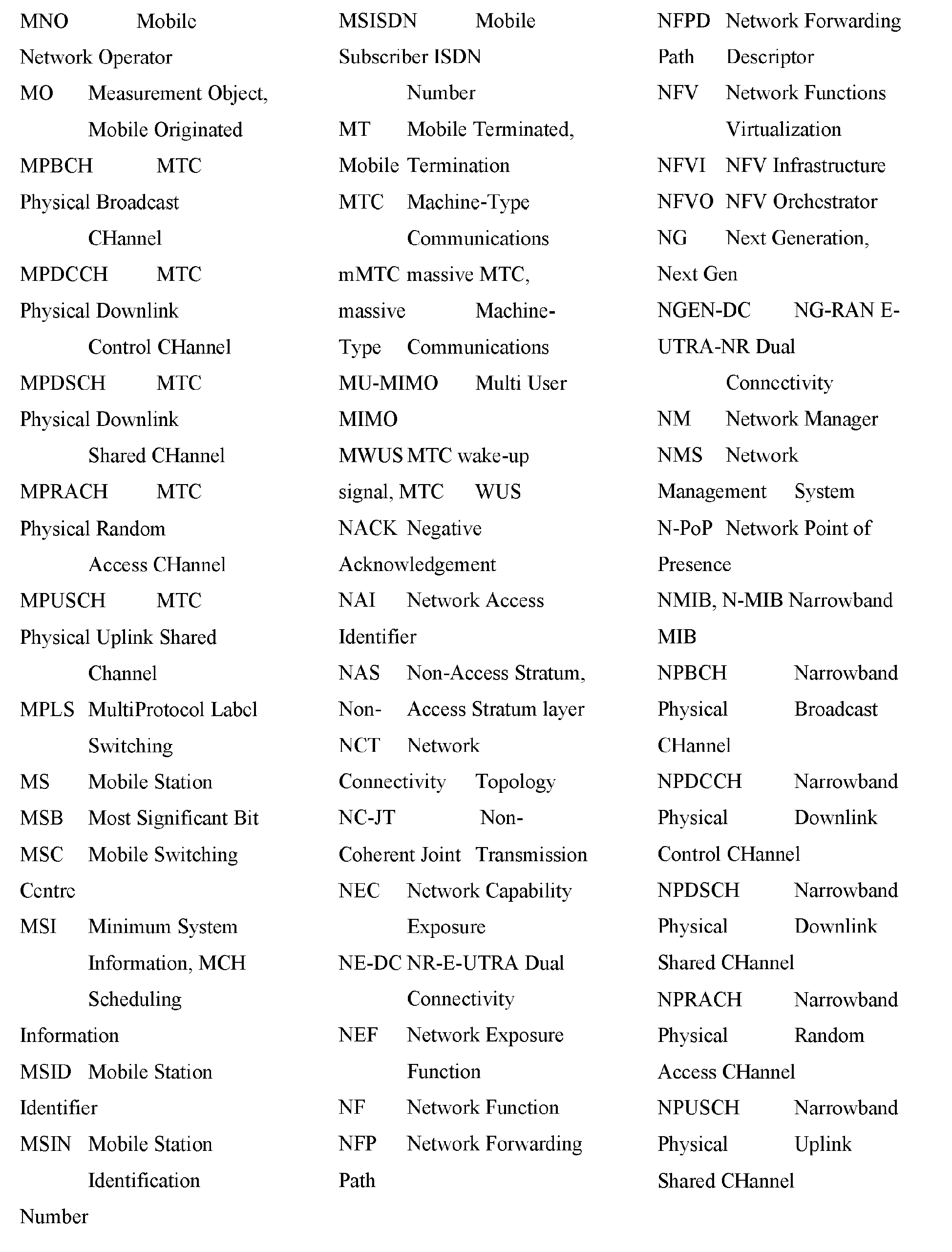

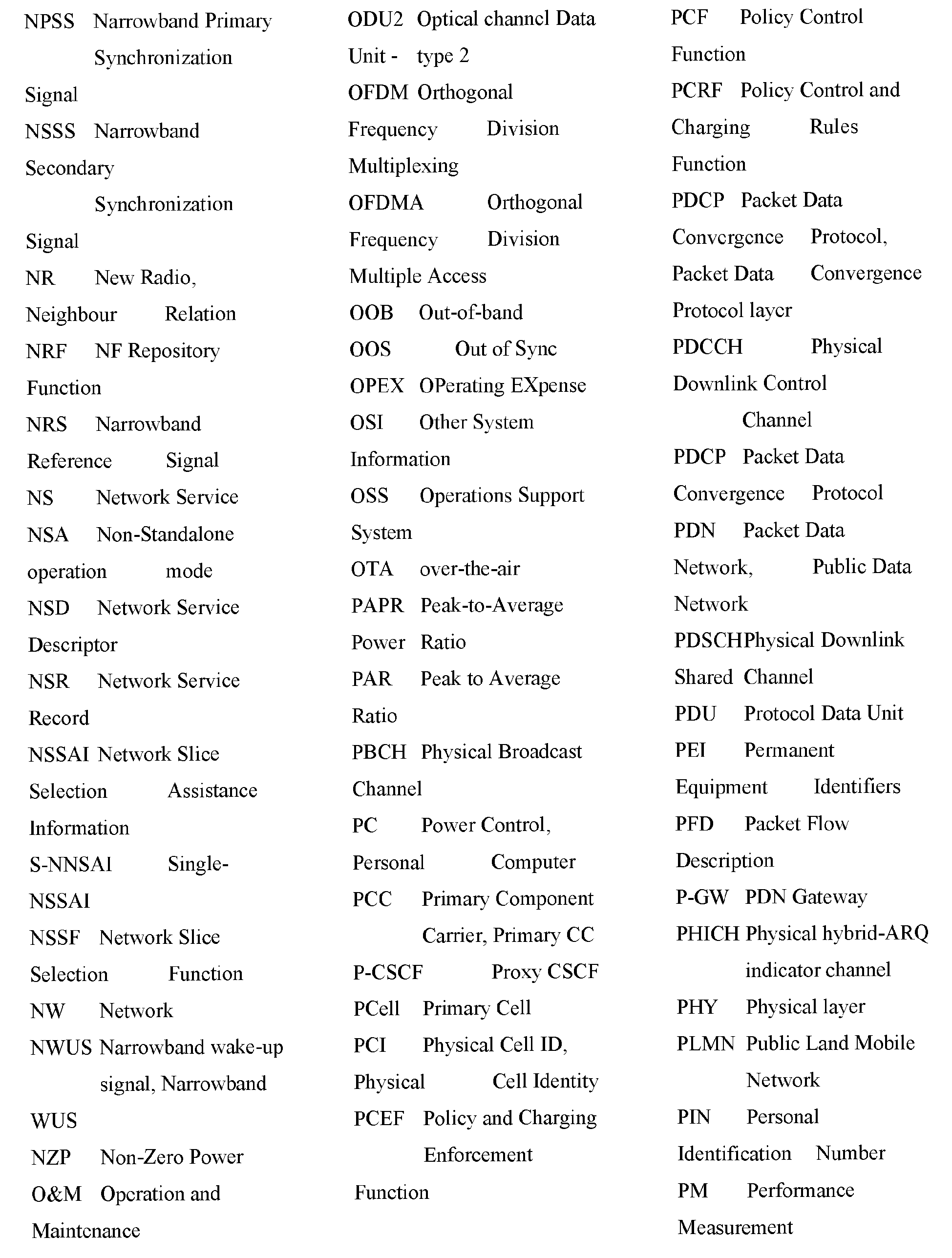

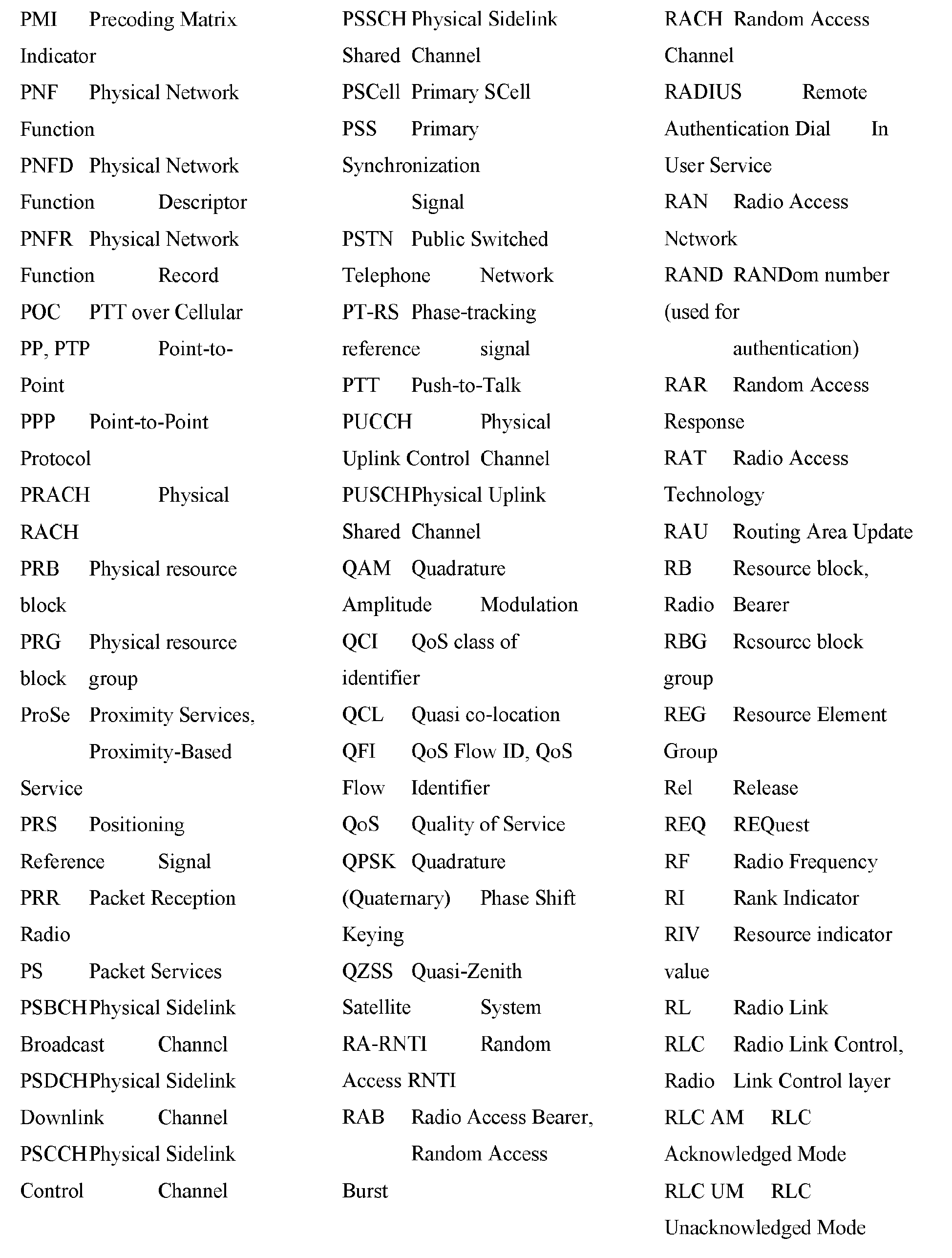

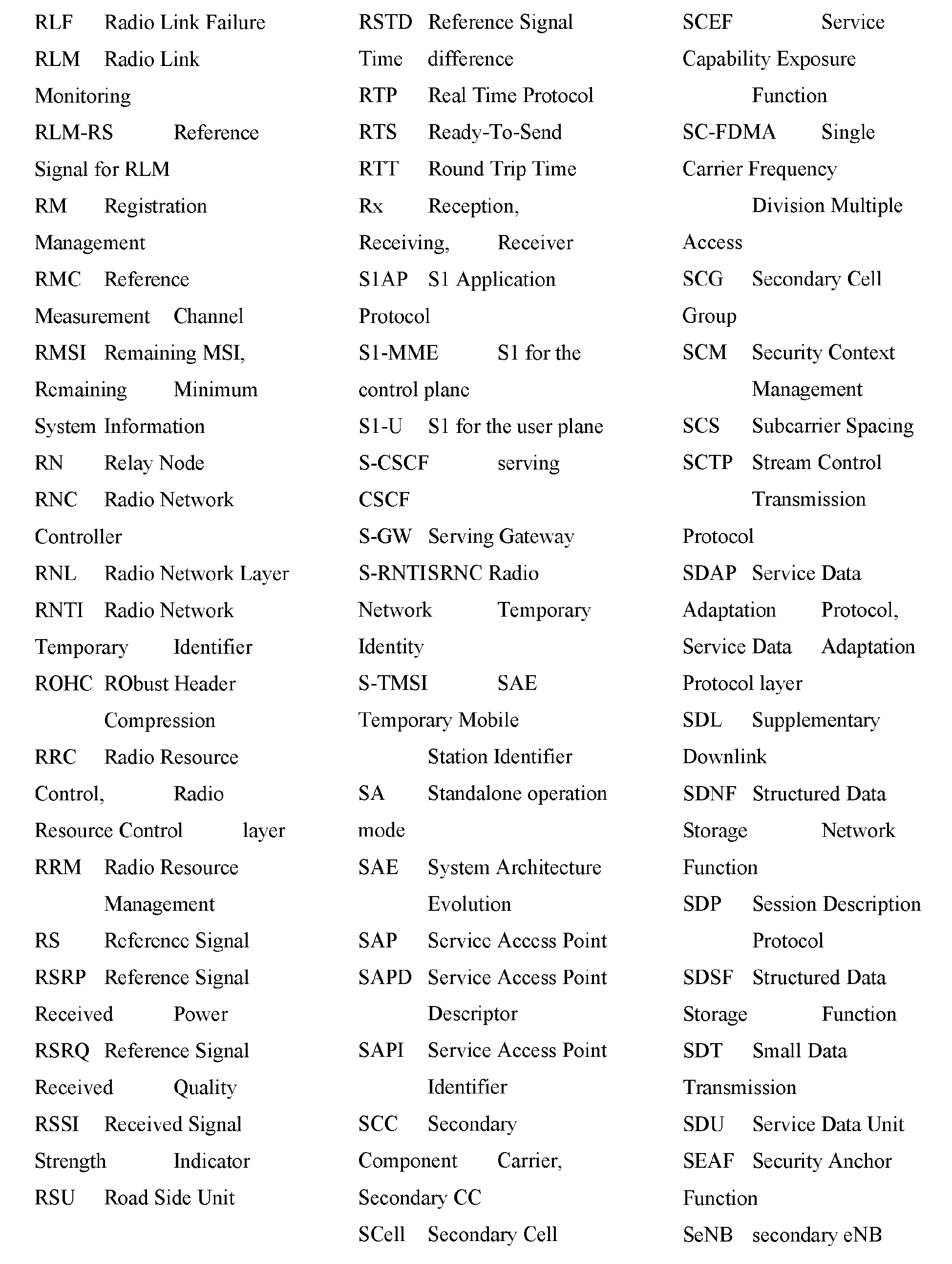

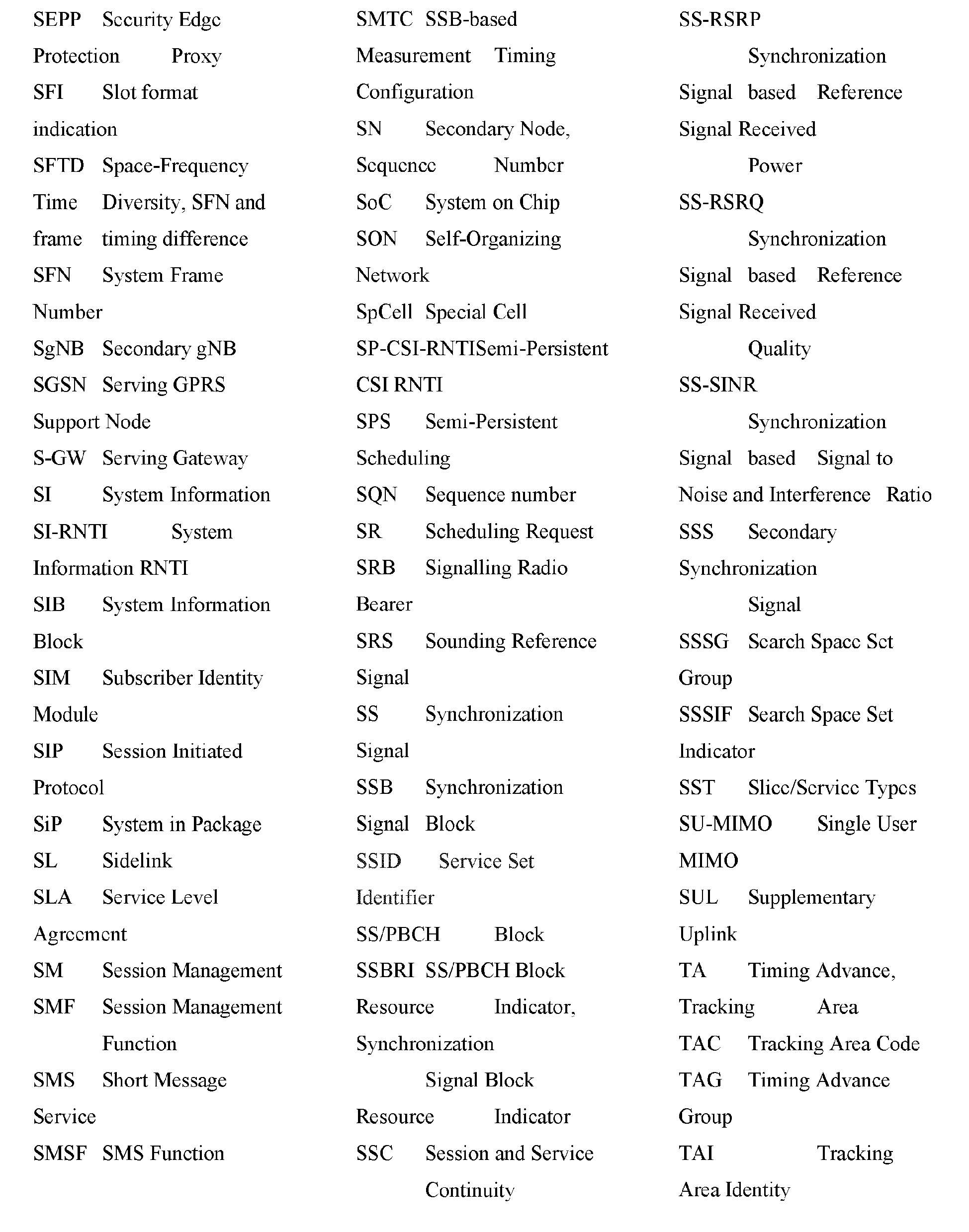

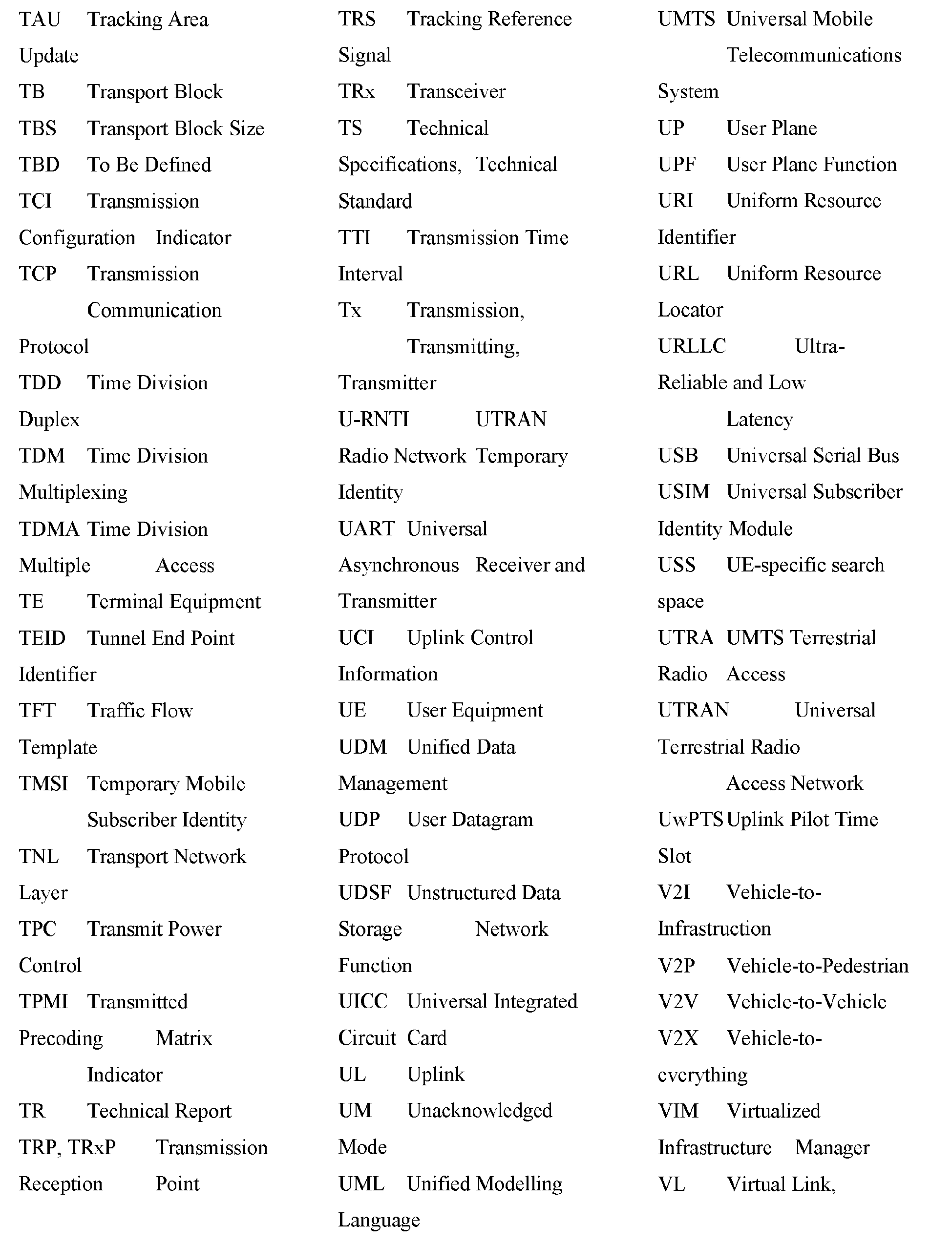

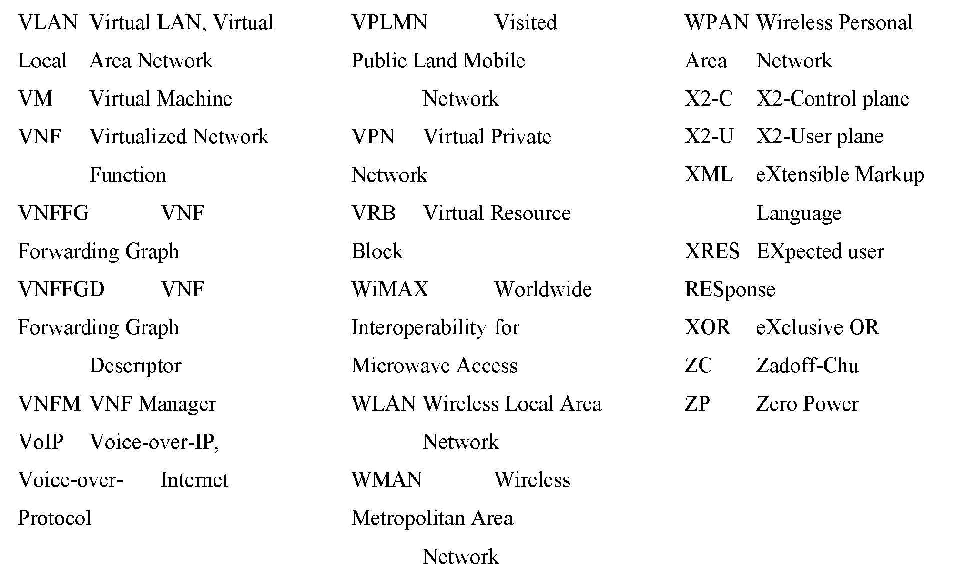

### Terminology

For the purposes of the present document, the following terms and definitions are applicable to the examples and embodiments discussed herein.

The term "application" may refer to a complete and deployable package, environment to achieve a certain function in an operational environment. The term "AI/ML application" or the like may be an application that contains some AI/ML models and application-level descriptions.

The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "ML-assisted solution" is a solution that addresses a specific use case using ML algorithms during operation. ML models include supervised learning (e.g., linear regression, k-nearest neighbor (KNN), descision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus of a non-real time RAN intelligent controller (RIC), comprising one or more processors, configured to execute an A1 Enrichment Information (EI) related function, wherein the A1 EI related function comprises enabling one or more of the following functionalities in a framework of the non-real time RIC:
• producing an A1 EI related service that permits a service consumer to register, update, and/or deregister EI types;
• collecting EI results for created EI jobs; or
• interfacing with Near-RT RICs through an A1 interface.

2. The non-real time RAN intelligent controller of claim 1, wherein:
if the A1 EI related function comprises producing the A1 EI related service that permits the service consumer to register, update, and/or deregister EI types, the A1 EI related service is configured to be consumable by an rApps automation function, and the A1 EI related service is configured to be consumable by an external enrichment information source;
if the 1A EI related function comprises collecting EI results for created EI jobs, the A1 EI related function is configured to collect EI data by consuming data management and exposure services; and
if the 1A EI related function comprises interfacing with Near-RT RICs though the A1 interface, the A1 EI related function comprises exposing discoverable EI types and a description of EI types to the Near-RT RIC when the Near-RT RIC queries available EI types; receiving EI job creation, update, query, and deletion requests from the Near-RT RIC; receiving EI job statues query from the Near-RT RIC, and it notifies EI status to the Near-RT RIC; and setting up connections with the Near-RT RIC and delivering EI job results to the Near-RT RIC.

3. The non-real time RAN intelligent controller of claim 1 or 2, wherein the one or more processors are configured to implement the A1 EI related function part of the A1 related functions in the Non-RT RIC framework, and the A1 EI related service exposed to rApps is part of the A1 related services.

4. The non-real time RAN intelligent controller of any one of claims 1 to 3, wherein the one or more processors executing the A1 EI related function comprises receiving EI types in the non-RT RIC.

5. The non-real time RAN intelligent controller of claim 4, wherein the service consumer uses an HTTP POST method to register EI-type, preferably wherein the message body comprises an eiTypeObject.

6. The non-real time RAN intelligent controller of claim 5, wherein eiTypeObject comprises information of the registered EI type, including:
• Information for the A1 EI related function to fetch EI results from DME functions in the Non-RT RIC, e.g. registered EI data type in DME; and
• Information exposed to the Near-RT RIC via A1 interface.

7. The non-real time RAN intelligent controller of any one of claims 1 to 6, wherein, after receiving the registration request from the service consumer, the one or more processors executing the A1 EI related function are configured to indicate to the service consumer whether the registration was successful; wherein if the registration was successful, an identification eiTypeId is assigned to registered EI type; and if the registration fails, an error code is sent back to the service consumer.

8. The non-real time RAN intelligent controller of any one of claims 1 to 7, wherein after receiving a registration update request from a service consumer, the one or more processors executing the A1 EI related function are configured to send a response that the message body of the HTTP response contains an updated eiTypeObject, if the update is successful; and to send a response that an error code is sent back to the service consumer, if the update fails; and preferably wherein the service consumer uses an HTTP PUT method using eiTypeId assigned to this EI type.

9. The non-real time RAN intelligent controller of any one of claims 1 to 8, wherein the A1 EI related service consumer is configured to deregister a registered EI types to the A1 EI related function in the Non-RT RIC, and preferably wherein the service consumer uses an HTTP DELETE method using eiTypeId assigned to this EI type with an empty message body.

10. The non-real time RAN intelligent controller of any one of claims 1 to 9, wherein after receiving a deregistration request from the service consumer, the one or more processors executing the A 1 EI related function are configured to respond to the service consumer by indicating whether the deregistration was successful, and if the deregistration was successful, the one or more processors executing the A1 EI related function is configured to return an HTTP response with empty message body; and if the deregistration failed, the one or more processors executing the A1 EI related function are configured to send a an error code to the service consumer.

11. The non-real time RAN intelligent controller of any one of claims 1 to 10, wherein, based on the data type information contained in the registered eiTypeObject, the one or more processors executing the A1 EI related function are configured to send a data type discovery request to the DME functions, and if the rApp has already registered a corresponding data type with the DME functions, the DME functions are configured to expose the queried data type to the A1 EI related function.

12. The non-real time RAN intelligent controller of any one of claims 1 to 11, wherein after successful discovery of the EI data type from the DME functions, the one or more processors executing the A1 EI related function are configured to make the registered EI type discoverable to connected Near-RT RICs.

13. The non-real time RAN intelligent controller of any one of claims 1 to 12, further comprising the one or more processors executing the A1 EI related function subscribing EI data from the DME functions by consuming DME services, after the Near-RT RIC creates EI jobs for discoverable EI type.

14. A method of non-real time RAN intelligent control (RIC), comprising executing an A1 Enrichment Information (EI) related function, wherein the A1 EI related function enables one or more of the following functionalities in a framework of the non-real time RIC:
• producing an A1 EI related service that permits a service consumer to register, update, and/or deregister EI types;
• collecting EI results for created EI jobs; or
• interfacing with Near-RT RICs through an A1 interface.

15. A non-transitory computer readable medium, comprising instructions which, if executed, cause one or more processors to enable one or more of the following functionalities in a framework of the non-real time RIC:
• producing an A1 EI related service that permits a service consumer to register, update, and/or deregister EI types;
• collecting EI results for created EI jobs; or
• interfacing with Near-RT RICs through an A1 interface.
